# EUROPÄISCHE PATENTSCHRIFT

(11) **EP 1 979 135 B1**
(45) Veröffentlichungstag und Bekanntmachung des Hinweises auf die Patenterteilung: **07.08.2013**
(21) Anmeldenummer: 06806460.9
(22) Anmeldetag: 23.10.2006
(51) Int. Cl.: B29C 45/14, B29C 45/16, B25G 1/10

(54) **GRIFF FÜR EIN EIN TORSIONSMOMENT ÜBERTRAGENDES WERKZEUG**
HANDLE FOR A TOOL TRANSMITTING A TORSIONAL MOMENT
POIGNÉE POUR OUTIL TRANSMETTEUR DE COUPLE DE TORSION

(30) Priorität: 29.12.2005 DE 102005063035; 18.01.2006 DE 102006002594; 08.02.2006 DE 102006006012; 03.03.2006 DE 102006010397; 16.03.2006 DE 102006012576; 31.03.2006 DE 202006005385 U; 03.04.2006 DE 202006005503 U; 10.05.2006 DE 102006022019; 23.06.2006 WO PCT/EP2006/006092; 23.06.2006 WO PCT/EP2006/006093
(43) Veröffentlichungstag der Anmeldung: 15.10.2008
(73) Patentinhaber: Felo-Werkzeugfabrik Holland-Letz GmbH, 35279 Neustadt (DE)
(72) Erfinder: HOLLAND-LETZ, Horst, 35279 Neustadt/Hessen (DE); HOLLAND-LETZ, Martin, 35279 Neustadt/Hessen (DE)
(74) Vertreter: Rehberg Hüppe + Partner
(86) Internationale Anmeldenummer: PCT/EP2006/010184
(87) Internationale Veröffentlichungsnummer: WO 2007/048555

(56) Entgegenhaltungen:
- EP-A- 1 136 219
- EP-A- 1 314 519
- EP-A1- 0 727 289
- WO-A-03/078108
- DE-U1- 29 705 522
- FR-A- 2 754 204
- US-A- 5 740 586

## Beschreibung

### TECHNISCHES GEBIET DER ERFINDUNG

Die Erfindung betrifft einen Griff für ein Werkzeug, mit dem ein Torsionsmoment übertragen werden kann. Insbesondere betrifft die Erfindung einen Schraubendreher oder eine Schraubzwinge.

### STAND DER TECHNIK

Gestaltungs- und Bewertungskriterien für Griffe für Werkzeuge sind insbesondere
- die Herstellungskosten des Griffes,
- das Gewicht des Griffes,
- das Anpassungsvermögen des Griffes an eine Hand und u. U. unterschiedliche Handgrößen und Kräfte unterschiedlicher Benutzer des Griffes und/oder
- das Übertragungsvermögen für Kräfte und Momente, insbesondere Torsionsmomente für ein ein Torsionsmoment übertragendes Werkzeug wie ein Schraubendreher.

Aus dem Stand der Technik ist eine Vielzahl von Ausgestaltungsformen für Griffe für Werkzeuge und für deren Herstellungsverfahren bekannt:

### Griffe insbesondere für Schraubendreher

US-PS 2,871,899 betrifft eine erste Weiterentwicklung eines Griffs für ein Werkzeug wie einen Schraubendreher aus Hartkunststoff mit dem Ziel einer Verbesserung der Haptik des Griffes. Demgemäß wird auf einen Griffkern ein vorgefertigter Griffmantel aus weichem Kunststoff aufgezogen. Griffkern und Griffmantel sind zur Übertragung eines Torsionsmoments in Umfangsrichtung formschlüssig über Profilierungen miteinander verbunden. Der Einsatz des weichen Kunststoffs verbessert die Griffigkeit des Griffs. Bei einer praktischen Erprobung des bekannten Griffs hat sich jedoch gezeigt, dass der weiche Griffmantel bei schweren Beanspruchungen von dem harten Griffkern abhebt und Falten bilden kann. Dieses "Walken" genannte Abheben des Griffmantels von dem Griffkern führt insbesondere bei Dauerbenutzung des bekannten Griffs zu einer schmerzhaften Blasenbildung im Bereich der Handfläche des Benutzers und zu einer Entzündungen verursachenden überhöhten Belastung der Handknochen.

Zur Vermeidung der vorgenannten Nachteile ist im Folgenden vorgeschlagen worden, den Griffkern stoffschlüssig mit dem Griffmantel zu verbinden, wobei der weiche Kunststoff
- hierbei lediglich in Umfangsrichtung verteilte Teilbereiche des Griffmantels bildet oder
- in Umfangsrichtung geschlossen den Griffkern umgibt,
vgl. insbesondere DE 92 02 550 U1, DE 43 04 965 A1, DE 295 15 833 U1, DE 195 39 200 A1, DE 295 17 276 U1, DE 299 00 746 U1, DE 299 04 082 U1.

Bei derartigen Griffen aus zwei Kunststoff-Komponenten ist in einem Griffkern aus Hartkunststoff, dem ersten Griffbereich, das Werkzeug verankert. Ein derartiger Griffkern wird anschließend mit einem Griffmantel aus weichem Kunststoff umspritzt, vgl. bspw. EP 0 627 974 B1, der auch als zweiter Griffbereich bezeichnet wird. Der Griffmantel aus weichem Kunststoff hat eine gewisse Elastizität und vermittelt ein angenehmeres Greifgefühl als ein Griff, der nur aus Hartkunststoff hergestellt ist. Der weiche Kunststoff hat außerdem u. U. einen höheren Reibungskoeffizienten als Hartkunststoff. Deshalb können mit einem derartigen "2-Komponenten-Griff" u. U. höhere Torsionsmomente übertragen werden als mit einem Griff gleicher Größe aus Hartkunststoff. Dies ist von Bedeutung bei Griffen für Schraubendreher, Schraubzwingen, etc. Der Oberbegriff des Ansprüches 1 geht von der EP0627974 aus.

Ein weiterer Zwei-Komponenten-Griff für einen Schraubendreher ist aus EP 0 727 289 A1 bekannt. Bei diesem ist der Griffkern mit einer grundsätzlich nicht flexiblen Ummantelung versehen, welche den Reibwert zwischen Hand und Griff erhöhen soll.

US 5,740,586 A offenbart einen Griff für einen Schraubendreher, bei dem eine Trägerschicht mit einer Hülle aus Weichkunststoff mit einer Härte von 35 Shore D ummantelt ist.

EP 1 314 519 A1 offenbart eine Hülse aus einem verformbaren Material, die auf einenGriffkern eines Schraubendrehers aufschiebbar ist.

US 2,871,899 offenbart einen Griff zur Übertragung eines Torsionsmoments mit einem Griffkern, in dessen Längsbohrung reibschlüssig ein Schaft des Werkzeugs einpressbar ist. Der Griffkern besitzt eine zylinderförmige Mantelfläche, auf die eine Hülse mit einem ungefähr gleichen inneren Durchmesser aufgeschoben werden kann und dort reibschlüssig gehalten ist. Das Material der Hülse ist weicher und stärker dämpfend als das Material des Griffkerns. Hierzu findet beispielsweise ein dämpfendes, gummiähnliches Material mit einer Härte von zwischen 40 und 90 Shore A Einsatz, insbesondere ein Neopren-Gummi mit einer Härte zwischen 55 und 70 Shore A und einer Zugfestigkeit zwischen 1500 und 2000 Pfund/Inch² mit einer Dehnung von ungefähr 350 %. Abweichend von einer reibschlüssigen Verbindung zwischen Hülse und Griffkern kann zusätzlich ein Kleber eingesetzt werden oder ein elastischer Formschluss in Längsrichtung eingesetzt werden. Die Hülse kann ein Spritzguss-Bauelement sein. Weiterhin können zur Erzielung eines Formschlusses in Umfangsrichtung die Außenfläche des Griffkerns und die Innenfläche der Hülse mit in Längsrichtung verlaufenden Nuten, Vorsprüngen oder Zähnen ausgestattet sein.

DE 694 21 765 T2 (EP 0 635 337 B1) geht aus von einem Stand der Technik, bei dem auf dem Schaft eines Schraubendrehers aufeinander folgende Schichten aus Kunststoffmaterialien angeformt werden. Eine zentrale Schicht, in welcher der Schaft des Schraubendrehers eingebettet ist, wird als erstes geformt, und die Schicht, welche die Peripherie des Griffs begrenzt, wird auf diese zentrale Schicht oder auf Zwischenschichten aufgeformt. Für derartige Formvorgänge werden Spritzpressen verwendet mit mehreren Spritzköpfen, üblicherweise mit zwei oder drei derartigen Köpfen. Hiervon ausgehend schlägt die Druckschrift vor, einen Schaft eines Schraubendrehers in einen Kunststoffgriff einzubetten. Ein vorderer Bereich der Mantelfläche des Griffs ist von einer Kunststoffhülse gebildet. Die Kunststoffhülse ist mit zwei koaxial ineinander liegenden Teilen mit ringförmigen Querschnitten gebildet, wobei zunächst das innenliegende Teil mit einem Spritzgießverfahren hergestellt wird und auf dieses Teil das andere, die Mantelfläche bildende Teil mit einem Spritzgießverfahren aufgeformt wird. Zur formschlüssigen Verbindung der beiden Teile in der Kunststoffhülse besitzen die Teile komplementäre Vorsprünge und Ausnehmungen. Die Hülse wird mit einer herkömmlichen Presse mit zwei Spritzköpfen hergestellt. In einem darauf folgenden Verfahrensschritt wird in einer derartigen Hülse unter Ausbildung eines radialen Zwischenraums ein Schaft angeordnet. In eine geeignete Form wird dann ein Kunststoffmaterial derart eingespritzt, dass dieses den Zwischenraum im Inneren der Hülse, einen balligen Endbereich des Griffs und einen endseitigen Mantelbereich radial außenliegend von einem Endbereich der Hülse ausfüllt. Das innere Teil der Hülse ist mit einem härteren Kunststoff gebildet als das äußere Teil der Hülse. Das Ergebnis ist ein marktüblicher 2-Komponenten-Griff, der eine relativ dünne Außenschicht aus elastischem Kunststoff und einen Griffkern aus Hartkunststoff aufweist, aber sich nicht unter Einwirkung einer Handkraft verformt.

EP 1 314 519 A1 betrifft ebenfalls Griffe für Schraubendreher. Bei diesen ist der Schaft in einen Griffkern aus einem relativ harten Kunststoff eingebettet. Der Griffkern ist zumindest teilweise mit einem verformbaren Elastomermaterial ummantelt. Zur Verhinderung einer Verletzung des verformbaren Materials der Ummantelung ist die Ummantelung mit einem dünnen Überzug überzogen, der eine Schutzschicht und eine Schicht zum Zusammenhalten der elastomeren Ummantelung bildet. Alternativ zum Einsatz eines Elastomermaterials für die verformbare Ummantelung kann ein Gelmaterial Einsatz finden. Weiterhin offenbart die Druckschrift die Anordnung der verformbaren Umhüllung, hier eines Gelkissens, in einer Hülse mit einer geschlossenen Umhüllung. Eine derartige Hülse soll auf einen Schaufelstiel oder einen Hammerstiel aufgeschoben werden, um hier einen Griff zu bilden. Durch eine zumindest teilweise Verformbarkeit der Griffoberfläche soll ermöglicht werden, dass der Griff nachgibt, wenn beispielsweise ein Benutzer an einer bestimmten Stelle stärker zugreift als an einer anderen. Auch wenn die Hand des Benutzers von der Standardform und Standardgröße abweicht, kann auf diese Weise ein besseres Fassen und Behandeln des Griffs durchgeführt werden. Wie groß die Nachgiebigkeit der Ummantelung ausgeführt wird, hängt von den Umständen des Einzelfalls und von der Art des Griffs bzw. der Art des Werkzeugs ab, das mit diesem Griff benutzt werden soll. Die Verformbarkeit des Griffs kann sich beispielsweise über den gesamten Bereich des Griffelements erstrecken, an dem ein Benutzer angreift. Ebenfalls möglich ist, dass die Verformbarkeit auf einen Teil der Griffoberfläche begrenzt ist, beispielsweise auf den Teil, an dem der Benutzer mit der Handinnenfläche angreift, während die Teile des Griffs, an denen der Benutzer mit den Fingerspitzen angreift, nicht verformbar ausgebildet sind. Eine solche Gestaltung der Griffoberfläche bietet sich beispielsweise bei Schraubendrehern an, bei denen bestimmte Bereiche der Griffoberfläche so ausgebildet sind, dass sie zum schnellen Drehen des Werkzeugs mit den Fingerspitzen gedacht sind. Die Verformbarkeit der Griffoberfläche soll hierbei auf eine bestimmte Tiefe unterhalb der Griffoberfläche begrenzt sein. Innen soll ein harter Griffkern vorhanden sein, der nicht nur zur Verbindung mit dem Schaft dienen kann, sondern auch einen festen Halt für die Übertragung der Bewegung von der Hand auf das Werkzeug bieten soll. Die Dicke der verformbaren Schicht ist aber zu gering, um eine Anpassung des Griffes an die Hand des Benutzers zu ermöglichen.

DE 92 02 550 U1 der Anmelderin offenbart einen 2-Komponenten-Griff für einen Schraubendreher, der einen Griffkern aus einem Hartkunststoff, beispielsweise Polypropylen, besitzt, der in einer ersten Form mit eingelegtem Schaft hergestellt wird. In einer zweiten Form wird der Griffkern mit einem weichen Kunststoff, beispielsweise einem thermoplastischen Elastomer mit einer Endhärte von 60-80 Shore A, ummantelt. Zur Herstellung eines kuppelförmigen Bereichs wird in eine Form ein zylinderförmiges Formstück in axialer Richtung eingeführt, welches stirnseitig die Form der Kuppe vorgibt, so dass die gefertigte Kuppe nahtlos in die weitere Mantelfläche des Griffmantels übergeht (s. a. DE 43 04 965 A1). Auch dieser Griff ist ein heute marktüblicher 2-Komponenten-Griff, der keine Anpassungsmöglichkeit an die Hand eines Benutzers bietet.

DE 35 25 163 C2 offenbart einen Griff für Schraubendreher, in dem zunächst ein Schaft mit einem Griffkern aus einem Hartkunststoff ummantelt ist. Eine endseitige, kalottenförmige Kuppe aus Hartkunststoff kann separat geformt und nachträglich mit dem Griffkern verbunden sein oder an den Griffkern angeformt werden. Eine Mehrteiligkeit empfiehlt sich, wenn die Kuppe noch aus einem härteren Material als der Griffkern bestehen soll. Bei mehrteiliger Ausgestaltung kann ein zentraler Zapfen der Kuppe in eine formentsprechende Ausnehmung des Griffkerns eintreten. Der Griffkern besitzt ungefähr mittig eine radiale Erweiterung, im Bereich welcher der Griffkern mit dem Hartkunststoff einen Teil der Mantelfläche des Griffs bildet. In axialer Richtung vor und hinter diesem Bereich liegende Teilbereiche der Mantelfläche sind mit einer Ummantelung des Griffkerns mit einem weichen Kunststoff gebildet, wobei die Erweiterung des Griffkerns vier axiale, in Umfangsrichtung verteilte Bohrungen besitzt, über die der vordere Teilbereich und der hintere Teilbereich der Mantelfläche aus weichem Kunststoff miteinander verbunden sind.

Weitere 2- oder Mehr-Komponenten-Griffe, insbesondere für Schraubendreher, bei denen zumindest ein axialer Teilbereich oder ein Teilumfang der Mantelfläche von einem auf einen harten Griffkern aufgespritzten weichen Kunststoff gebildet ist, sind beispielsweise aus DE 195 39 200 A1, DE 295 17 276 U1, EP 0 208 942 A2, DE 92 02 550 U1 oder DE 299 04 082 U1 bekannt.

EP 0 358 883 A1 offenbart einen Griff für einen Schraubendreher, bei dem sich eine vordere Hälfte und eine hintere Hälfte von einem mittigen Bereich maximalen Durchmessers kontinuierlich ohne Ausbildung von Hinterschneidungen verjüngen. Für eine derartige Ausgestaltung kann der Griff mit zwei Formhälften in einem Spritzgussverfahren hergestellt werden mit einer Teilungsfuge, die quer zu einer Längserstreckung der Schraubendreherachse gerichtet sein kann.

US 3,189,069 offenbart einen Schraubendreher mit einem reibschlüssig auswechselbar in einem Griffkern gehaltenen Schaft. Der Griffkern besitzt im Bereich seiner Mantelfläche in axialer Richtung verlaufende Rippen und Nuten. Weiterhin besitzt der Griffkern eine Umfangsnut. Auf den Griffkern ist in axialer Richtung ein Griffmantel aufgeschoben, wobei nach innen orientierte Fortsätze des Griffmantels in Umfangsrichtung formschlüssig in die Nuten des Griffkerns eingreifen. Der Griffmantel schnappt mit einem weiteren Fortsatz in die Umfangsnut ein, wodurch der Griffmantel gegenüber dem Griffkern gesichert ist. Neben dem erwähnten Formschluss liegen Teilsegmente des Griffmantels unter Ausbildung einer radialen Anpresskraft an dem Griffkern an, so dass ein Reibschluss gebildet ist. Für das Material des Griffmantels wird ein weicheres Material gewählt als für den Griffkern, beispielsweise Gummi.

Aus den Druckschriften WO 00/43166 und EP 1 163 088 B1 sind Griffe bekannt, bei denen durch eine asymmetrische Formgestaltung die ergonomischen Eigenschaften im Vergleich zu marktüblichen Griffen verbessert sein sollen. Nachteilig bei diesen bekannten Griffen ist, dass der Griffmantel aus weichem Kunststoff nur eine geringe Dicke besitzt und damit nur in einem geringen Maß nachgiebig ist. Hinsichtlich der Herstellung sind die Griffe in bestimmten Größen und Formen standardisiert, während die Hände der Benutzer verschiedene Größen und Maßverhältnisse haben. Deshalb ist insbesondere für unterschiedliche Hände von unterschiedlichen Benutzern eine optimale Ergonomie für derartige bekannte Griffe nicht gewährleistet. Bei Griffen für Schraubendreher kommt hinzu, dass bei einem Schrauben die Hand des Benutzers, die den Griff dreht, in Umfangsrichtung ihre Koppelstellung mit dem Griff laufend verändert. Der Griff kann deshalb nicht in einer optimalen ergonomischen Grundform ausgebildet werden, wie das bei den asymmetrischen Griffen gemäß WO 00/43166 und EP 1 163 088 B1 der Fall ist, bei denen die Hand im Gebrauch im Wesentlichen eine einzige Koppelstellung zu dem Griff haben kann.

### Griffe für Zangen

DE 20 2004 019 156 U1 beschreibt eine Zange mit zwei Zangenschenkeln mit zwei gleich ausgebildeten Griffen. Jeder Griff weist im Bereich der Mantelfläche drei Bereiche auf, die hintereinander liegend in Richtung des Endbereichs des Griffs zunehmende Härten besitzen. Der härteste Bereich bildet einen Griffkörper mit einer endseitigen Mantelfläche, auf den die anderen Teilbereiche zur Bildung der weiteren Bereiche der Mantelfläche aufgebracht sind. Während für den ersten Bereich ein hartes Material wie ein Hartplastik eingesetzt wird, welches in einem Spritzgussverfahren hergestellt sein kann, besteht der zweite Bereich aus einem weicheren Kunststoff. Der dritte Bereich ist mit einem Gelkissen ausgebildet. Der Schaft des Werkzeugs ist in den ersten Bereich eingebettet.

EP 0 538 632 A1 betrifft ebenfalls einen Griff für eine Zange, bei der ein Schaft eines Zangenschenkels über den außenliegenden Teilumfang mit einem weichen Kunststoff ummantelt ist, beispielsweise Polyvinylchlorid oder Polyethylen mit einer Härte zwischen 65-82 Shore A, insbesondere 66-70 Shore A, während der innenliegende Teilumfang mit einem formstabilen harten Kunststoff, insbesondere Zelluloseacetat oder Acrylnitril-Butadien-Styrol-Copolymere, ummantelt ist, beispielsweise mit einer Härte im Bereich von 85-92 Shore A, insbesondere 86-90 Shore A. Weiterhin ist es möglich, dass im Bereich des inneren Umfangs Einsätze vorgesehen sind, die ebenfalls entsprechend dem äußeren Umfangsbereich aus einem weichen Kunststoff bestehen, so dass in Umfangsrichtung ein harter Kunststoff und ein weicherer Kunststoff abwechselnd angeordnet sind.

Weitere Zwei-Komponenten-Griffe für Zange sind aus FR 2 754 204 A und DE 297 05 522 U1 bekannt.

Bei allen 2-Komponenten-Griffen, insbesondere für Schraubendreher, Kellen, Zangen, Feilen, Sägen usw. ist nach dem Stand der Technik die Außenschicht weicher als der Griffkern und verhältnismäßig dünn. Eine elastische Verformbarkeit derartiger Griffe ist nicht gegeben.

### Griffe für Schlagwerkzeuge

US 6,370,986 B1 geht von dem Stand der Technik aus, dass Hammer üblicherweise einen Griffkern aus einem harten Material wie einem Metall, einem Verbundmaterial oder einem synthetischen Material besitzen, der zur Bildung eines Griffs mit einer gummiartigen, verhältnismäßig harten Hülse umgeben ist. Offenbart ist ein manuell betätigtes Stoß- oder Schlagwerkzeug. Ein Griff besitzt eine innere Schicht sowie eine äußere Schicht. Die innere Schicht und die äußere Schicht bestehen aus gleichen Materialen, nämlich Polyvinylchlorid, Polypropylen oder ein thermoplastisches Elastomermaterial. Die äußere Schicht ist härter als die innere Schicht, aber kann ebenfalls flexibel oder dämpfend sein. Die unterschiedlichen Steifigkeiten der inneren Schicht und der äußeren Schicht werden nicht durch die verwendeten Materialien erzeugt, sondern dadurch, dass die innere Schicht geschäumt ist, während die äußere Schicht nicht geschäumt ist. Die Materialien für die innere und äußere Schicht sind geeignet gewählt, so dass diese chemisch kompatibel sind und ein Anhaften oder ein Fügen der Schichten möglich ist. Die innere Schicht dient einer Dämpfung eines auf einen Kopf des Schlagwerkzeugs aufgebrachten Stoßes oder Schlags bei dessen Kraftfluss zu der Hand eines Benutzers des Stoß- oder Schlagwerkzeugs. Weiterhin beschreibt die Druckschrift die für Stoß- und Schlagwerkzeuge spezifischen Probleme, die abweichend zu solchen von Torsionsmomentübertragungswerkzeugen sind. Das Schlagwerkzeug besitzt eine Seele, beispielsweise aus Metall, die unmittelbar und ohne Zwischenschaltung einer Zwischenschicht mit der geschäumten inneren Schicht verbunden ist, so dass mit Seele, innerer Schicht und äußerer Schicht ein dreischichtiger Aufbau gewählt ist. Die Seele ist im Querschnitt rechteckförmig ausgebildet mit Verdickungen im Endbereich, so dass vereinfacht gesprochen ein Doppel-T-Profil oder I-Profil gebildet ist. In dem Griff erstreckt sich die Seele teilweise lediglich mit den Verdickungen, also den Querschenkeln des Doppel-T-Profils, während der Längsschenkel des Doppel-T-Profils hier unterbrochen oder mit Zwischenräumen ausgebildet ist. In derartige Zwischenräume kann das Material der inneren Schicht eintreten. Die auskragenden Endbereiche des Doppel-T-Profils bilden Vibrationen aufnehmende Elemente. Die äußere Schicht besitzt radial nach innen orientierte, in Umfangsrichtung verteilte und sich in Längsrichtung des Griffs erstreckende Rippen, die in entsprechende Nuten des geschäumten Materials der inneren Schicht eintreten. Diese Rippen dienen einer Versteifung des Griffs und einer Steuerung einer Kompression der inneren Schicht gegen die Seele. Weiterhin besitzt die äußere Schicht sich über einen Teilumfang erstreckende Rippen, die die Funktion der in Längsrichtung orientierten Rippen weiter unterstützen sollen. Die Fertigung des Griffbereiches erfolgt in einem zweistufigen Spritzgussverfahren ("two shot", "double shot"-Spritzgussverfahren): Im ersten Verfahrensschritt wird die Seele in eine erste Form eingelegt und mit Polyvinylchlorid ausgeschäumt. In der Seele können Ausnehmungen angeordnet sein, in die in dem Spritzgussverfahren das geschäumte Material eintritt, wodurch die Wirkverbindung zwischen Seele und innerer Schicht verbessert werden kann. Anschließend wird die Seele mit der Ummantelung durch die erste Schicht in eine zweite Form eingelegt, in der dann in einem zweiten Spritzguss-Verfahrensschritt härteres Polyvinylchlorid eingespritzt wird. Für die innere Schicht ist eine Härte Shore A zwischen 45 und 65 Shore A, vorzugsweise 55 Shore A, angegeben, während die Härte der äußeren Schicht zwischen 66 und 76 Shore A, insbesondere 71 Shore A, beträgt. Vorteilhaft ist bei dem gewählten zweistufigen Spritzgussverfahren, dass während der Herstellung die Dimensionen der inneren Schicht und die Dicke der Wandung der äußeren Schicht präzise vorgegeben werden können. Eine Möglichkeit einer Fertigung des Griffs mit abweichenden Fertigungsmethoden, insbesondere ein Einsatz eines Monosandwich-Spritzgussverfahrens, ist ebenfalls pauschal angesprochen. Fraglich ist, ob das zweistufige Spritzgießverfahren zu einem Griff führt, bei dem die innere Schicht noch nachgiebig ist. Beim Aufspritzen der äußeren Schicht wirkt nämlich ein hydraulischer Druck auf die Oberfläche der inneren Schicht, der bei einem solchen Verfahren bei 600 bis 800 bar liegt. Unter einem solchen Druck wird eine geschäumte Schicht so zusammengepresst, dass sie nicht mehr porös ist. Dann ist sie nur noch so weit nachgiebig, wie es die Härte des verwendeten Kunststoffes zulässt. Eine Härte von 45 bis 65 Shore A ist aber schon zu hoch, um eine ausreichende Nachgiebigkeit zu bieten.

Aus US 3,770,033 ist ein Griff für einen Hammer bekannt. Der Griff ist als Integralschaum-Teil hergestellt. Bei einem derartigen Griff wird ein harter Kern, Stiel oder eine Seele des Hammers von dem aus Struktur-Schaum bestehenden eigentlichen Griffkörper umschlossen. Der Griffkörper wird im Querschnitt aus einer an der Seele anliegenden Schicht und einer äußeren Schicht mit relativ hoher Dichte und einer dazwischen liegenden Schicht mit geringer Dicke gebildet. Dieser Aufbau des Griffs ermöglicht eine elastische Querschnitts-Verformung des Griffs und dämpft Stöße beim Arbeiten mit dem Hammer. Die dünnen Schichten mit unterschiedlicher Dichte entstehen unter Einwirkung des Druckes, der im Inneren der Masse entsteht, wenn ein Treibmittel zur Porenbildung vergast und die Randschicht der Masse an die Wand der Formkavität gepresst und hier verdichtet wird. Zur Übertragung höherer Torsionsmomente, wie beispielsweise bei Schraubendrehern, ist ein derartiger Griff allerdings ungeeignet, da der Kern, auch in einer unrunden Querschnittsform, einen zu kleinen Durchmesser bzw. einen zu kleinen Hebelarm zur Erzeugung eines Torsionsmoments besitzt und die poröse Innenschicht alleine keine ausreichende Torsionssteifigkeit hat.

US 3,770,033 betrifft einen Griff eines Stoß- oder Schlagwerkzeugs wie einen Hammer, einen Vorschlaghammer, eine Hacke, eine Axt o. ä.. Ein Körper eines Griffs ist mit einem steifen Plastikschaum gebildet mit einer Dichte im Bereich von 35-45 Pfund/Fuß³ und mit einem zentralen, verstärkten Griffkern. Der Körper des Griffs kann aus Plastikmaterial gebildet sein, beispielsweise Polyethylen, Polystyren, Polyurethan, Polypropylen. Plastikschaum wird in eine gewünschte Form um den Griffkern gespritzt, wobei der Körper des fertiggestellten Griffs durch eine Art Presspassung mit dem Griffkern ausbilden soll. Das formgebende Verfahren schafft inhärent Schichten, die eine Innenschicht und eine Außenschicht des Körpers bilden mit einer größeren Dichte als die Dichte von Zwischenbereichen zwischen den vorgenannten Schichten mit niedriger Dichte. Die Innen- und Außenschichten haben eine Dicke von gewöhnlicherweise zwischen 0,04 bis 0,05 Inch (1,016 bis 1,27 mm).

DE 101 13 368 A1 offenbart einen Griff für ein Schlagwerkzeug, bei dem zur Stoßabsorption der Schaft in einem Griff aus einem elastischen Material aufgenommen ist. Der Griff besitzt auf der Ober- und Unterseite in axialer Richtung orientierte, durchgehende Ausnehmungen, in die weitere, über die Mantelfläche des Griffs verteilte radial orientierte Ausnehmungen münden.

DE 197 32 421 C2 betrifft ebenfalls ein Schlagwerkzeug, bei dem sich von einem Endstück oberhalb und unterhalb des Schafts zwei Hohlfinger in axialer Richtung erstrecken, die von einer elastischen Griffhülle ummantelt sind. Über die Finger soll eine Stoßabsorption erreicht werden.

US 2003/0172498 A1 offenbart einen Griff, der Vibrationen für einen Einsatz bei einem Schlag- oder Stoßwerkzeug dämpfen soll. Auf einer Ober- sowie Unterseite des Griffs ist jeweils ein Kissen angeordnet, welches aus einer elastomeren Ummantelung und einem hierin eingeschlossenen Schaum besteht. Bei der elastomeren Ummantelung kann es sich um ein thermisches Plastik-Olefin, thermisches plastisches Gummi, thermische plastische Polyurethane, Polyvinylchlorid, steyrenische Block-Polymere und eine Kombination der vorgenannten Materialien handeln. Das Material wird in einem Spritzgussverfahren verarbeitet. Zur Herstellung der Kissen wird in einer Spritzgussmaschine das Elastomermaterial mit einem schäumenden Mittel gemischt. Die geschmolzene Mixtur wird dann in eine Form eingespritzt. Die kältere Temperatur der Form stellt während des Einspritzens eine Wärmesenke dar, so dass die Temperatur des Materials im Kontaktbereich mit der Form schneller abkühlt als im Inneren. Somit entsteht eine Art Haut aus nicht geschäumtem Elastomermaterial. Im Inneren bleibt die höhere Temperatur des Gemisches erhalten und führt zu einer Schaumbildung im Inneren, so dass der Schaum den innerhalb der Haut verfügbaren Raum ausfüllt. Wird der Griff aus der Form entfernt, kann bei geeigneter Temperaturgestaltung eine weitere Expansion des Schaums im Inneren der Haut zu einer Dehnung der Haut führen, was eine Verringerung der Wandstärke der nicht geschäumten Schicht zur Folge haben kann. Mit einer endgültigen Abkühlung härtet sowohl die Haut als auch der Schaum aus. Bei dem schäumenden Mittel kann es sich um feste Partikel, eine Flüssigkeit oder ein Gas handeln. Insbesondere ist das schaumbildende Mittel endotherm ausgebildet. Im Verhältnis zwischen dem Elastomermaterial und dem schaumbildenden Mittel findet eine Konzentration von 1-10 % Einsatz.

Weitere Griffe für Schlag- und Stoßwerkzeuge sind in US 5,490,437 und US 6,619,408 B1 beschrieben.

DE 299 04 043 U1 betrifft ein Einsatzgebiet, welches Stoß- und Schlagwerkzeugen verwandt ist, nämlich eine Maschine wie beispielsweise eine Schlagbohrmaschine, ein Schleifgerät o. ä. Eine Griffschale, die beispielsweise aus Kunststoff oder Metall gebildet ist, ist mit einer Oberflächenbeschichtung aus Polyurethan versehen, die eine unterschiedliche Zellstrukturierung aufweisen kann.

### Griffe für sonstige Einsatzzwecke

US 4,023,606 offenbart eine Anordnung eines Blattes eines Eispickels in einer rohrförmigen Hülse. Ein geschäumtes Kunststoffmaterial ist zwischen die Hülse und den Schaft eingespritzt.

US 4,338,270 betrifft einen Griff für einen Golfschläger, der reibschlüssig auf den Schaft aufbringbar ist. Der Griff ist mit einer Hülse aus einem flexiblen Schaum gebildet, der radial außenliegend eine Oberflächenhaut ausbildet. Die nicht zellförmige oder poröse Außenhaut besitzt eine Dicke von ungefähr 0,005 Inch bis 0,020 Inch (0,127 bis 0,508 mm). Der Schaumbereich weist eine Härte von zwischen 55 und 65 Shore A auf. Die äußere Haut dient als Schutz gegen Abrasion oder Erosion des Griffs im Gebrauch. In einem Endbereich besitzt der Griff eine Kappe, die eine innenliegende sowie eine außenliegende Hülse besitzt, wobei die vorgenannten Hülsen über radial orientierte Rippen miteinander verbunden sind. Während die außenliegende Hülse die Mantelfläche im Endbereich bildet, dient die innenliegende Hülse einer Abstützung der Kappe an dem Schaft. Für die Kappe kommt ein Material mit einer Härte zwischen 70 und 90 Shore A zum Einsatz. Mögliche für den den Griff bildenden Schaum einsetzbare Materialien sind Polyurethan in Verbindung mit Polyol und Isocyanat. Als Treibmittel findet vorzugsweise Trichloromonofluoroethan Einsatz.

US 5,355,552 betrifft einen luftgefederten Griff für einen Tennisschläger, einen Hammer, ein Fahrrad o. ä. zur Absorption von Stößen. Hierzu besitzt der Griff Hohlkammern, in denen Luft, ggf. unter einem erhöhten Druck, angeordnet ist.

US 4,321,040 offenbart einen zweiteiligen Griff für ein medizinisches Gerät, bei dem zwischen einer flexiblen äußeren Hülse und einem Griffkern ein Verformungen ermöglichender Zwischenraum vorgesehen ist.

Schließlich offenbart EP 1 136 219 A1 ein Verfahren zur Herstellung eines Sandwich-Formkörpers, bei dem es sich beispielsweise um eine Innenverkleidung eines Kraftfahrzeuges, einen Griff, einen Bedienhebel, einen Schalthebelknopf oder einen Werkzeuggriff verschiedenster Art handeln kann. Die Druckschrift beschäftigt sich mit der Gestaltung des Herstellungsverfahrens sowie den einsetzbaren Materialen, nicht jedoch mit dem konstruktiven Aufbau des Formkörpers.

### AUFGABE DER ERFINDUNG

Der Erfindung liegt die Aufgabe zugrunde, einen Griff für ein ein Torsionsmoment übertragendes Werkzeug vorzuschlagen, bei dem ein guter Kompromiss zwischen
- einer ausreichenden Anpassbarkeit des Griffs an die Hand eines Benutzers oder die Hände unterschiedlicher Benutzer und
- einer hinreichend steifen Übertragung eines Torsionsmoments
gegeben ist.

### LÖSUNG

Die Aufgabe der Erfindung wird erfindungsgemäß mit den Merkmalen des unabhängigen Anspruchs 1 gelöst. Weitere Ausgestaltungen der Lösung ergeben sich entsprechend den Merkmalen der abhängigen Ansprüche 2 bis 23.

### BESCHREIBUNG DER ERFINDUNG

Bei einem erfindungsgemäßen Griff ist eine äußere Schicht mit einem weichen Kunststoff gebildet, wobei diese äußere Schicht in Umfangsrichtung durchgehend ausgebildet ist und sich durchgehend in axialer Richtung oder sich nur teilweise oder in mehreren Teilbereichen in axialer Richtung erstreckt. An die äußere Schicht ist radial innenliegend stoffschlüssig eine innere Schicht angebunden, die aus einem vergleichsweise härteren Kunststoff besteht. In der inneren Schicht ist unmittelbar oder unter Zwischenschaltung mindestens einer weiteren Schicht ein Schaft des Werkzeugs angeordnet, wodurch eine verhältnismäßig steife Anbindung zwischen der inneren Schicht und dem Schaft des Werkzeugs gewährleistet ist. Möglich ist bspw., dass der Schaft von einem Griffkern ummantelt ist, der dann wiederum von der inneren Schicht umgeben ist, ggf. sogar unter Zwischenschaltung einer zusätzlichen Griffkernummantelung. Bei der äußeren Schicht kann es sich um eine Mantelfläche des Griffes handeln. Ebenfalls möglich ist, dass die äußere Schicht von einer weiteren oder mehreren weiteren Schichten zumindest teilweise umgeben ist, mit der oder denen dann eine Mantelfläche des Griffes gebildet ist.

Problematisch ist für aus dem Stand der Technik bekannte Ausgestaltungen mit einer Schicht aus weichem Kunststoff, dass zwar einerseits eine Nachgiebigkeit des Griffs im Bereich der weichen Schicht gewünscht ist. Andererseits führt eine derartige radiale Nachgiebigkeit der Schicht aus weichem Kunststoff dazu, dass auch eine Torsionssteifigkeit des Griffs im Bereich der Schicht aus weichem Kunststoff gemindert wird. Als Folge wird für aus dem Stand der Technik bekannte Ausgestaltungen, s. bspw. DE 694 21 765 T2, die Schichtdicke der weichen nachgiebigen Schicht aus weichem Kunststoff auf maximal ¹/₅ des Radius des Griffs begrenzt. Sollen größere radiale Erstreckungen der nachgiebigen Schicht zum Einsatz kommen, so wird gemäß dem Stand der Technik, s. DE 10 2004 063 349, die nachgiebige Schicht aus weichem Kunststoff in Umfangsrichtung nicht umlaufend ausgebildet, sondern durch Rippen oder Stege unterbrochen. Durch derartige Unterbrechungen können Torsionsverformungen der Schichten aus weichem Kunststoff verringert werden - im Bereich der Rippen oder Stege ist dann allerdings wiederum die radiale Nachgiebigkeit vermindert.

Die erfindungsgemäße Lösung ermöglicht eine umlaufende Ausbildung der äußeren Schicht aus weichem Kunststoff in Umfangsrichtung. Darüber hinaus kann erfindungsgemäß in einem Teilumfangsbereich die äußere Schicht aus weichem Kunststoff eine maximale radiale Erstreckung besitzen, die zumindest 30 % (insbesondere gemäß einer Variante A zumindest 40 %, einer Variante B zumindest 45 %, einer Variante C zumindest 50 % oder einer Variante D zumindest 60 %) des Radius des Griffs beträgt. Durch eine derart verhältnismäßig dicke Ausbildung der äußeren Schicht in diesem Bereich kann eine gute radiale Verformbarkeit des Griffs erzielt werden, wodurch die Wechselwirkungen zwischen Griff und Benutzer verbessert werden können.

Gleichzeitig müssen unerwünscht große Verminderungen der Torsionssteifigkeit des Griffs vermieden werden. Dies geschieht erfindungsgemäß dadurch, dass die Schichtdicke der äußeren Schicht aus weichem Kunststoff in Umfangsrichtung nicht konstant ist. Vielmehr besitzt die äußere Schicht aus weichem Kunststoff eine in Umfangsrichtung veränderliche radiale Erstreckung. Zumindest ein Teilumfangsbereich ist vorgesehen, in dem die äußere Schicht eine minimale radiale Erstreckung aufweist, die maximal der 60% der maximalen radialen Erstreckung beträgt, was auch für die weiteren Ausgestaltungen gemäß Varianten A bis D gelten kann. Insbesondere kann für sämtliche Ausführungsformen auch die minimale radiale Erstreckung nur maximal die Hälfte, 40% oder 30 % der maximalen radialen Erstreckung betragen.
- Dieser Ausgestaltung liegt die zunächst Erkenntnis zugrunde, dass, wie zuvor erläutert, durch die veränderliche Dicke der äußeren Schicht aus weichem Kunststoff eine Übertragung von Torsionsmomenten nicht lediglich durch Scherkräfte in der äußeren Schicht erfolgt, sondern vielmehr zwischen Bereichen minimaler radialer Erstreckung Umfangsbereiche mit maximaler radialer Erstreckung einer Druckbeanspruchung ausgesetzt werden.
- Darüber hinaus steht im Bereich der minimalen Erstreckung lediglich eine geringe "Schichtdicke" der äußeren Schicht für eine Scherverformung zur Verfügung, so dass eine torsionssteife Anbindung zwischen der äußeren Schicht und der inneren Schicht gegeben ist.
- Darüber hinaus ist durch eine veränderliche Schichtdicke die Mantelfläche der Schichten vergrößert, wodurch einerseits eine stoffschlüssige Anbindung zwischen benachbarten Schichten verbessert werden kann und andererseits auch die sich im Übergangsbereich benachbarter Schichten ergebende Schersteifigkeit vergrößert werden kann.

Überraschend kann somit erfindungsgemäß eine Schicht mit einem weichen Kunststoff mit in Teilumfangsbereichen großer Schichtdicke für ein Werkzeug wie einen Schraubendreher eingesetzt werden.

Die in Umfangsrichtung veränderliche radiale Erstreckung kann alternativ oder kumulativ mit einem in Umfangsrichtung veränderlichen Außenradius der äußeren Schicht und/oder einem in Umfangsrichtung veränderlichen Innenradius der äußeren Schicht einhergehen, wobei sich die radiale Erstreckung der äußeren Schicht infolge einer in Umfangsrichtung veränderlichen radialen Erstreckung einer äußeren Kontur der inneren Schicht und/oder einer etwaigen veränderlichen radialen Erstreckung einer inneren Kontur einer etwaigen Mantelschicht ergibt.

Für einen Verlauf der radialen Erstreckung der äußeren Schicht über die Umfangsrichtung sind beliebige Kurven, funktionale Abhängigkeiten oder stückweise lineare Abhängigkeiten möglich mit lediglich einem Maximum und einem Minimum oder aber zwei, drei, vier oder beliebig vielen absoluten oder relativen Maxima und Minima.

Erfindungsgemäß ist die äußere Schicht mit einer Mantelschicht aus einem Kunststoff ummantelt, der härter ist als der weiche Kunststoff der äußeren Schicht und insbesondere dem Kunststoff der inneren Schicht entspricht, wodurch ein Drei-Komponenten-Griff gebildet ist. Mit der Mantelschicht ist eine Mantelfläche des Griffs gebildet. Die radiale Erstreckung der Mantelschicht ist derart bemessen, dass bei von der Hand eines Benutzers des Griffs auf die Mantelfläche ausgeübten Kräften eine elastische Verformung sowohl der Mantelschicht als auch der äußeren Schicht erfolgt.

Für eine weitere Ausführungsform der Erfindung bildet die innere Schicht unmittelbar den Griffkern aus, der steif und dauerhaft den Schaft aufnimmt.

Für eine besondere Ausgestaltung der Erfindung liegt die Härte der inneren Schicht im Bereich zwischen 25 und 90 Shore A, vorzugsweise 30 bis 85 Shore A, insbesondere 30 bis 60 Shore A. Beispielsweise kann mit einer derartigen inneren Schicht eine Griffkernummantelung gebildet sein, die einen Griffkern zumindest teilweise ummantelt und für eine gute und dauerhafte Übertragung von Kräften und Momenten zwischen der äußeren Schicht und dem Griffkern sorgt.

Für den Fall, dass die äußere Schicht eine Mantelfläche des Griffs bildet, hat sich eine Härte für die äußere Schicht zwischen 25 und 75 Shore A, insbesondere 35 bis 55 Shore A, als guter Kompromiss für
- eine gute radiale Nachgiebigkeit des Griffes,
- eine hohe Torsionsteifigkeit und
- eine hohe Beständigkeit der Mantelfläche bei Einsatz des Griffes unter rauen Einsatzbedingungen, beispielsweise gegenüber der Gefahr von Beschädigungen der Mantelfläche durch Späne o. ä.,
herausgestellt.

Während möglich ist, dass erfindungsgemäß die innere und die äußere Schicht einen 2-Komponenten-Griff bilden, schlägt die Erfindung eine weitere Ausgestaltung vor, bei der die äußere Schicht zumindest teilweise mit einer Mantelschicht aus einem harten Kunststoff ummantelt ist, mit der eine Mantelfläche des Griffs gebildet ist. Die Schichtdicke der Mantelschicht und die Steifigkeit des Materials derselben sind derart konstruktiv vorgegeben, dass die Mantelschicht durch von der Hand des Benutzers auf den Griff in radialer Richtung aufgebrachte Kräfte verformbar ist, aber andererseits eine beständige, harte Oberfläche des Griffs gegeben ist. Durch die Ausbildung der äußeren Schicht mit in Umfangsrichtung veränderlicher radialer Erstreckung kann eine torsionssteife Anbindung zwischen der inneren Schicht und der Mantelschicht unter Zwischenschaltung der äußeren Schicht gewährleistet werden.

In Fällen, in denen die äußere Schicht nicht die Mantelfläche des Griffes bildet, kann ein verhältnismäßig weicher Kunststoff, hier mit eine Härte zwischen 10 und 40 Shore A, vorzugsweise 15 bis 35 Shore A, zum Einsatz kommen, der damit lediglich einer elastischen Abstützung in radialer Richtung, nicht jedoch einer Bereitstellung einer beständigen Mantelfläche dienen muss.

Für eine Weiterbildung dieser Erfindung kann die Härte einer Mantelschicht in einem solchen Fall vergrößert werden auf zwischen 25 bis 90 Shore A, vorzugsweise 30 bis 85 Shore A, insbesondere 30 bis 60 Shore A.

Für eine besondere Ausgestaltung sind in dem Griff in einem Teilumfangsbereich mit minimaler radialer Erstreckung Rippen oder Fortsätze aus Hartkunststoff oder einem harten Kunststoff vorgesehen, die insbesondere von der inneren Schicht getragen werden und radial nach außen orientiert sind und/oder von der Mantelschicht getragen sind und sich radial nach innen erstrecken. Durch derartige Rippen oder Fortsätze können auch sprungartige Veränderungen der radialen Erstreckung der äußeren Schicht in Umfangsrichtung erzeugt werden.

Vorzugsweise sind zwei (oder mehr) Teilumfangsbereiche mit verminderter radialer Erstreckung der äußeren Schicht vorgesehen. Durch die Teilumfangsbereiche können gezielt Anisotropien des Steifigkeitsverhaltens des Griffs erzeugt werden, wobei die zwei Umfangsbereiche geeignet über den Umfang verteilt sein können, so dass sich ein Griff in einer definierten Position gegenüber einer Hand eines Benutzers besonders gut an diese anpassen kann. Beispielsweise hat sich gezeigt, dass im Bereich der Finger auf die Mantelfläche eines Griffs eines Schraubendrehers größere Kräfte aufgebracht werden können als in einem vorderen Bereich der Handmulde.

Für eine besondere Ausgestaltung sind die zwei Teilumfangsbereiche mit verminderter radialer Erstreckung der äußeren Schicht in Umfangsrichtung ungefähr einander gegenüberliegend angeordnet. Wird der Griff mit derartigen "Vorzugsrichtungen" ausgestattet, kann es vorteilhaft sein, wenn diese Vorzugsrichtungen für den Benutzer des Griffs ersichtlich gemacht werden. Dies kann beispielsweise durch eine unsymmetrische Formgebung der äußeren Mantelfläche des Griffs erfolgen. Ebenfalls möglich ist der Einsatz eines "Auges" oder einer Querbohrung in dem dem Schaft gegenüberliegenden Endbereich des Griffs, wobei das Auge vorzugsweise seine Öffnung besitzt in Teilumfangsbereichen, in denen die minimale radiale Erstreckung der äußeren Schicht gegeben ist.

Während durchaus möglich ist, dass die äußere Schicht nicht porös ausgebildet ist, ist für eine weitere Ausgestaltung der Erfindung die äußere Schicht porös ausgebildet und beispielsweise unter Einsatz eines Treibmittels hergestellt. Für eine derartige Ausgestaltung beträgt insbesondere ein Raumgewicht des weichen Kunststoffs für die äußere Schicht zwischen 0,2 und 0,8 g/cm³. Ebenfalls möglich ist, dass die härtere innere Schicht mit demselben Material, allerdings dann mit verringerter oder keiner Porosität, gebildet ist.

Für den Fall, dass die veränderliche Erstreckung der äußeren Schicht durch die Formgebung der Außenkontur der inneren Schicht bestimmt wird, kann die innere Schicht, zumindest in einem Teilquerschnitt, einen
a) runden Querschnitt aufweisen mit mindestens einer sich radial nach außen erstreckenden Rippe,
b) eine in erster Näherung rechteckförmige äußere Querschnittskontur aufweisen, wobei der Teilumfangsbereich mit minimaler radialer Erstreckung der äußeren Schicht sich im Bereich der kürzeren Seite der rechteckförmigen Außenkontur ergibt oder
c) eine sternförmige äußere Querschnittskontur aufweisen, wobei beispielsweise die Spitzen des Sterns jeweils eine Art Rippe bilden mit radial nach außen abnehmender Erstreckung in Umfangsrichtung.

Für einen weiteren Vorschlag der Erfindung besitzt die äußere Schicht zumindest in den Bereichen der minimalen radialen Erstreckung in axialer Richtung eine im Wesentlichen konstante Dicke, so dass das elastische radiale Verhalten im Bereich der minimalen radialen Erstreckung in Längsrichtung des Griffs im Bereich der Mantelfläche ungefähr gleich bleibend ist. Eine derartige konstante Dicke kann beispielsweise dadurch bereitgestellt werden, dass Rippen der inneren Schicht eine entsprechend der Außenkontur des Griffs veränderliche Außenkontur aufweisen, so dass die Außenkontur der Rippen einen ungefähr konstanten Abstand zur Mantelfläche des Griffs aufweisen, der dann von der äußeren Schicht "überbrückt" wird.

Durch Ansätze an einer inneren Schicht oder deren unrunde Profilierung wird eine größerer Kontaktfläche zwischen innerer Schicht und äußerer Schicht erreicht und damit eine größerer Torsionssteifigkeit, insbesondere, wenn sich Ansätze oder das Profil der inneren Schicht radial weit in die äußere Schicht erstrecken und somit "der Hebelarm" zwischen der inneren und der äußeren Schicht verlängert wird.

Als kostengünstige, aber zuverlässige Materialien mit den gewünschten mechanischen Eigenschaften für die äußere Schicht finden insbesondere ein thermoplastisches Elastomer, ein thermoplastisches Polyolefin, Polypropylen, EPDM-Kautschuk, PVC oder Styrol-Block-Copolymer Einsatz.

Für eine besondere Ausgestaltung der Erfindung kann die maximale Erstreckung der äußeren Schicht größer sein als 3,5 oder 4 mm, insbesondere größer als 5, 6 oder 8 mm. Dieser Bereich ist insbesondere dort auf dem Griff angeordnet, wo ein Mittelfinger und Ringfinger sowie die Handfläche hauptsächlich am Griff anliegen.

Ebenfalls möglich ist, dass die äußere Schicht einen Füllstoff aufweist. Als mögliche Füllstoffe kommen ein Granulat wie ein Korkgranulat, Korkmehl, Holzmehl oder ein faserartiger Füllstoff wie Glasfasern in Betracht. Für den Fall, dass zumindest ein Teil derartiger Füllstoffe im Bereich der Mantelfläche des Griffs angeordnet ist, kann erreicht werden, dass die Mantelfläche des Griffs nicht vollständig glatt ist, sondern eine verbesserte Rutschfestigkeit besitzt, wodurch bspw. die durch das Werkzeug übertragbaren Torsionsmomente erhöht werden können. Korkmehl oder Holzmehl haben zum anderen den Vorteil, dass eine Feuchtigkeit der Hand aufgenommen werden kann, wie diese beim Arbeiten mit einem Werkzeug entstehen kann. Hierdurch kann ebenfalls die Rutschfestigkeit weiter verbessert werden. Ein möglicher Gewichtsanteil eines Füllstoffs am Gesamtgewicht der äußeren Schicht liegt bspw. unter 50 %, insbesondere zwischen 5 % und 30 %.

In einer Ausführungsvariante wird eine Mantelfläche des Griffs mit einer Folie gebildet, die stoffschlüssig an eine innenliegende Schicht, beispielsweise die äußere Schicht, angebunden ist. Eine Herstellung eines derartigen Griffs ist beispielsweise möglich unter Einlegen einer Folie in eine Form. Die Folie wird mit einem Ausfüllen der Form stoffschlüssig angebunden. Die physikalischen Eigenschaften und eine Oberfläche der Folie können so gewählt und gestaltet werden, dass sich eine verbesserte Mantelfläche des Griffs ergibt, die beispielsweise besonders öl- oder chemikalienbeständig ist oder eine rutschhemmende Oberfläche aufweist.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.

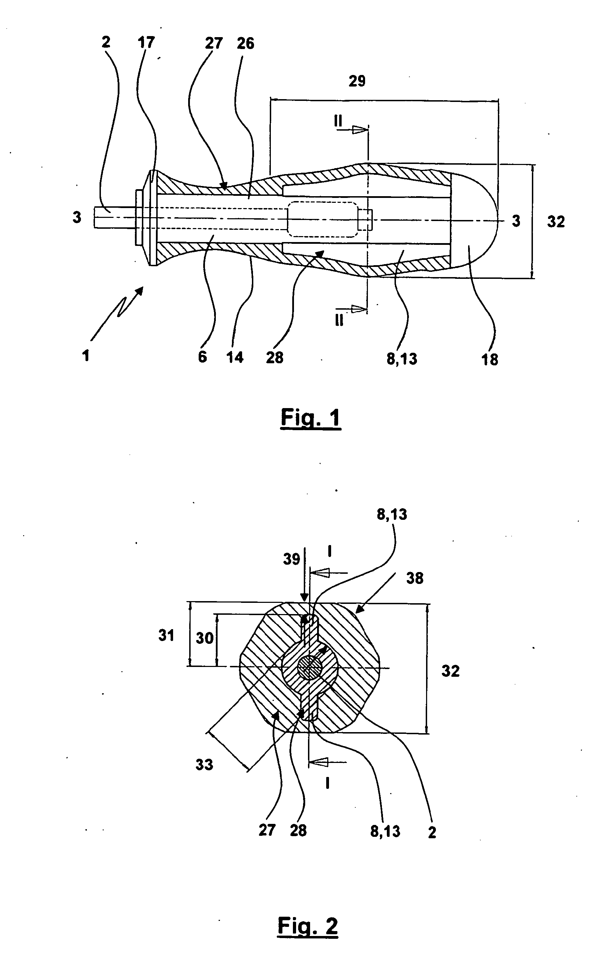

- **Fig. 1 und 2**: zeigen eine Ausführungsform eines Griffs in einem Längsschnitt und einem Querschnitt mit einer äußeren weichen Schicht, die die Mantelfläche des Griffs bildet und einer inneren härteren Schicht, die einen grundsätzlich runden Griffkern mit zwei gegenüberliegenden Rippen ausbildet.

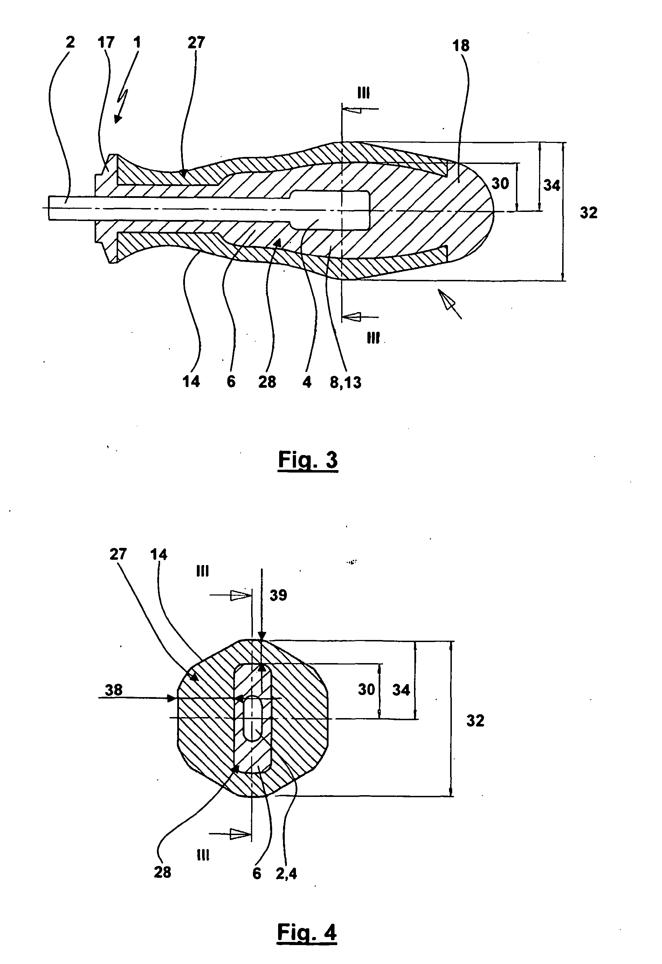

- **Fig. 3 und 4**: zeigen eine Ausführungsform eines Griffs in einem Längsschnitt und einem Querschnitt mit einer äußeren weichen Schicht, die die Mantelfläche des Griffs bildet und einer inneren härteren Schicht, die einen Griffkern mit ungefähr rechteckigem Querschnitt ausbildet.

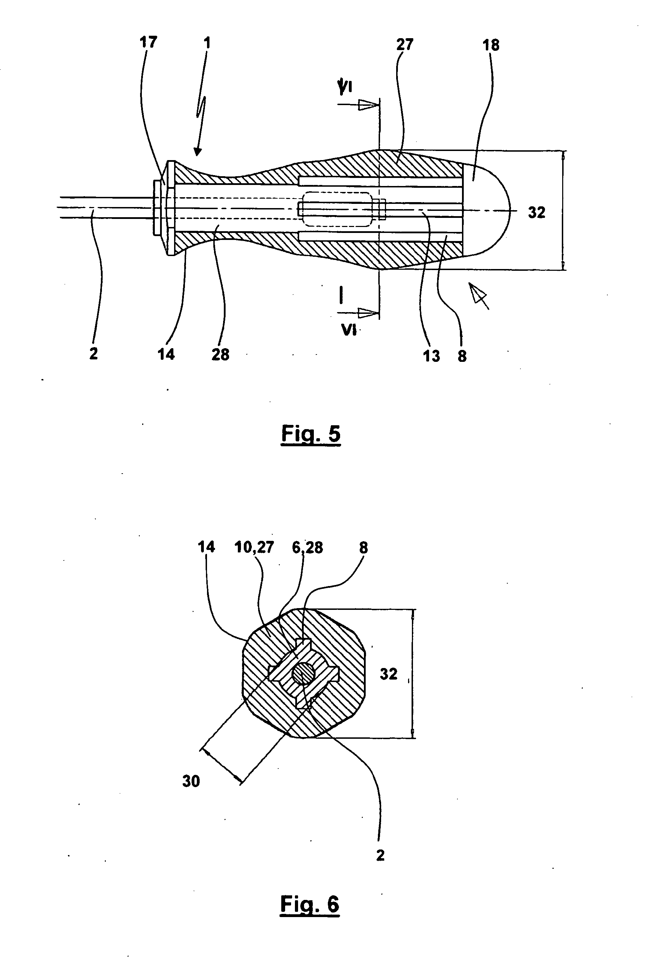

- **Fig. 5 und 6**: zeigen eine Ausführungsform eines Griffs in einem Längsschnitt und einem Querschnitt mit einer äußeren weichen Schicht, die die Mantelfläche des Griffs bildet und einer inneren härteren Schicht, die einen grundsätzlich runden Griffkern mit vier gleichmäßig über den Umfang verteilten Rippen ausbildet.

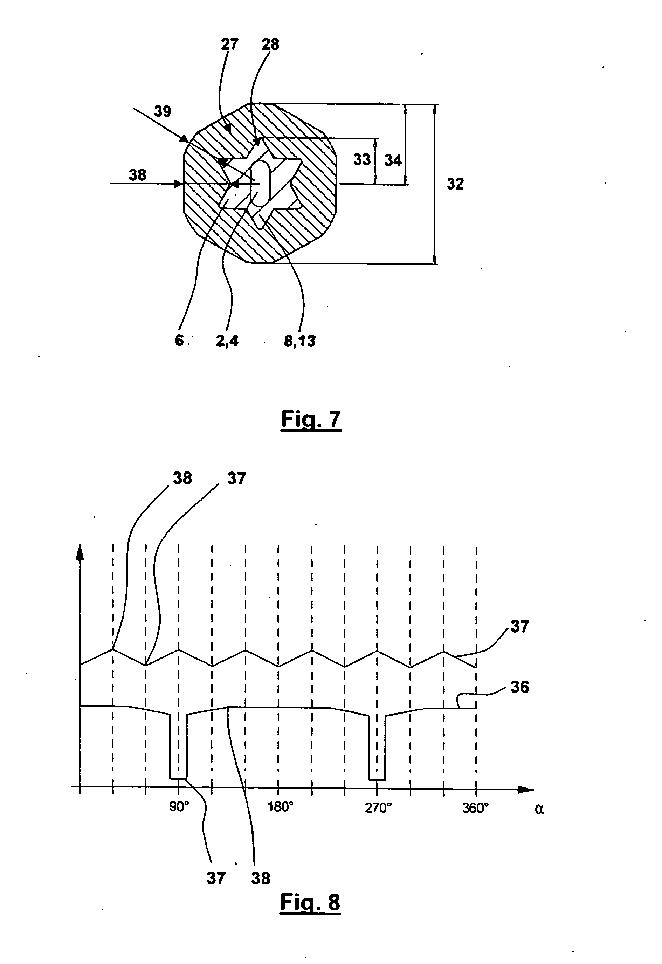

- **Fig. 7**: zeigt eine Ausführungsform eines Griffs in einem Querschnitt mit einer äußeren weichen Schicht, die die Mantelfläche des Griffs bildet und einer inneren härteren Schicht, die einen Griffkern mit sternförmiger Außenkontur ausbildet.
- **Fig. 8**: zeigt in einer Art Abwicklung der äußeren Schicht die radiale Erstreckung der äußeren Schicht als Funktion eines Umfangswinkels α.

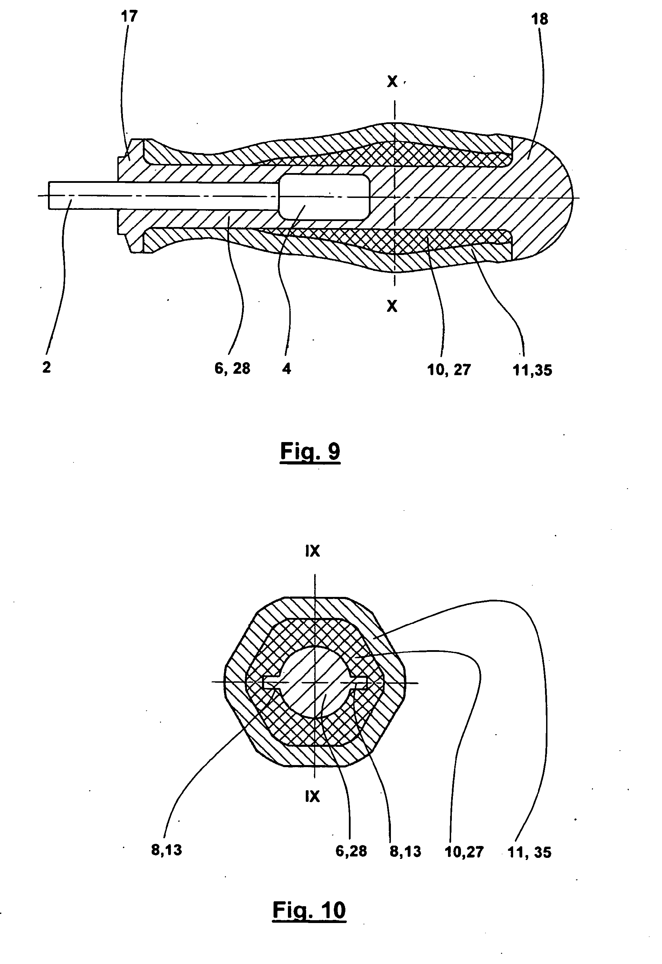

- **Fig. 9 und 10**: zeigen eine Ausführungsform eines Griffs in einem Längsschnitt und einem Querschnitt mit einer äußeren weichen Schicht, die von einer Mantelschicht aus einem härteren Material ummantelt ist, und einer inneren härteren Schicht, die einen grundsätzlich runden Griffkern mit zwei sich gegenüberliegenden Rippen ausbildet.

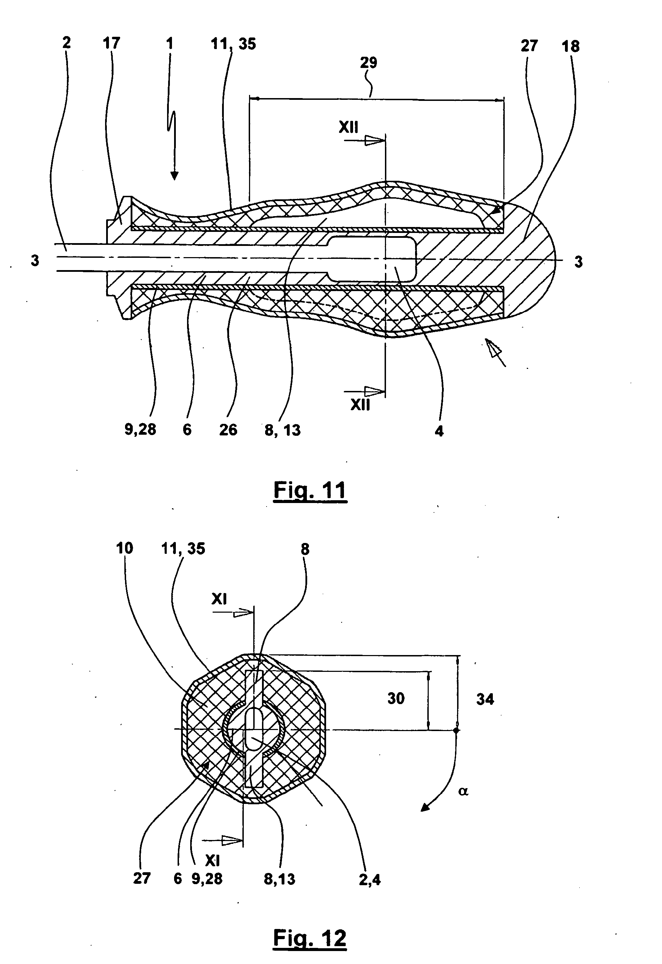

- **Fig. 11 und 12**: zeigen eine Ausführungsform eines Griffs in einem Längsschnitt und einem Querschnitt mit einer äußeren weichen Schicht, die von einer Mantelschicht aus einem härteren Material ummantelt ist, sowie einer inneren härteren Schicht, die eine Griffkernummantelung ausbildet, in der stoffschlüssig ein grundsätzlich runder Griffkern mit zwei sich gegenüberliegenden Rippen aufgenommen ist.

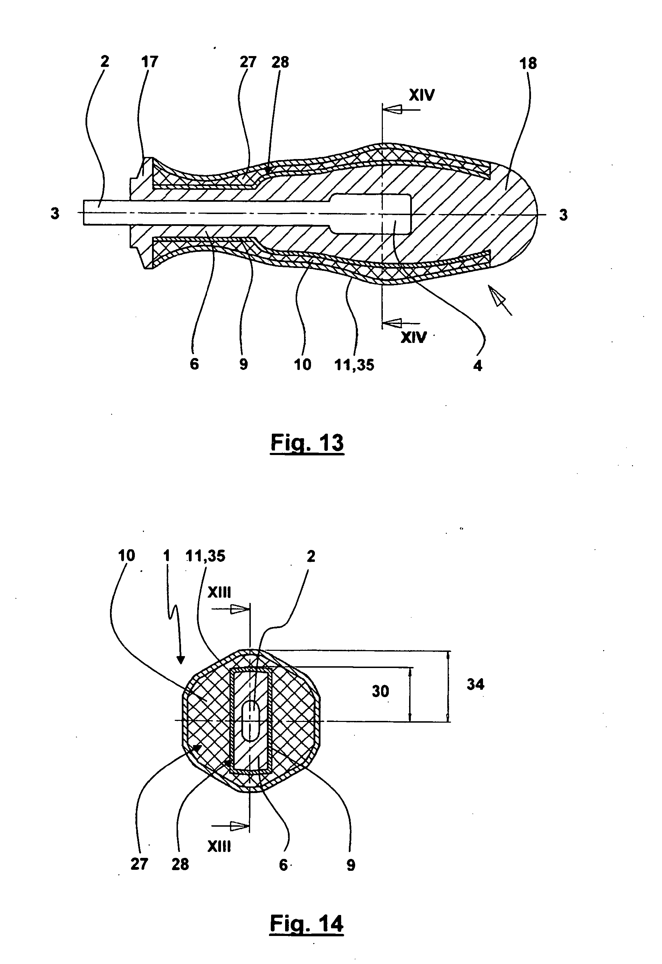

- **Fig. 13 und 14**: zeigen eine Ausführungsform eines Griffs in einem Längsschnitt und einem Querschnitt mit einer äußeren weichen Schicht, die von einer Mantelschicht aus einem härteren Material ummantelt ist, sowie einer inneren härteren Schicht, die eine Griffkernummantelung ausbildet, in der stoffschlüssig ein grundsätzlich rechteckiger Griffkern aufgenommen ist.

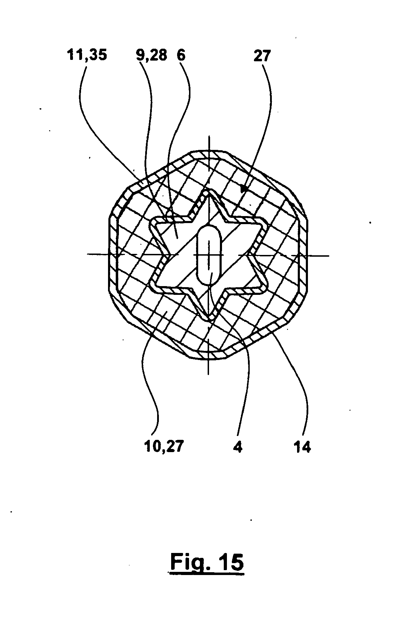

- **Fig. 15**: zeigt eine Ausführungsform eines Griffs in einem Querschnitt mit einer äußeren weichen Schicht, die von einer Mantelschicht aus einem härteren Material ummantelt ist, sowie einer inneren härteren Schicht, die eine Griffkernummantelung ausbildet, in der stoffschlüssig ein Griffkern mit sternförmiger Außenkontur aufgenommen ist.

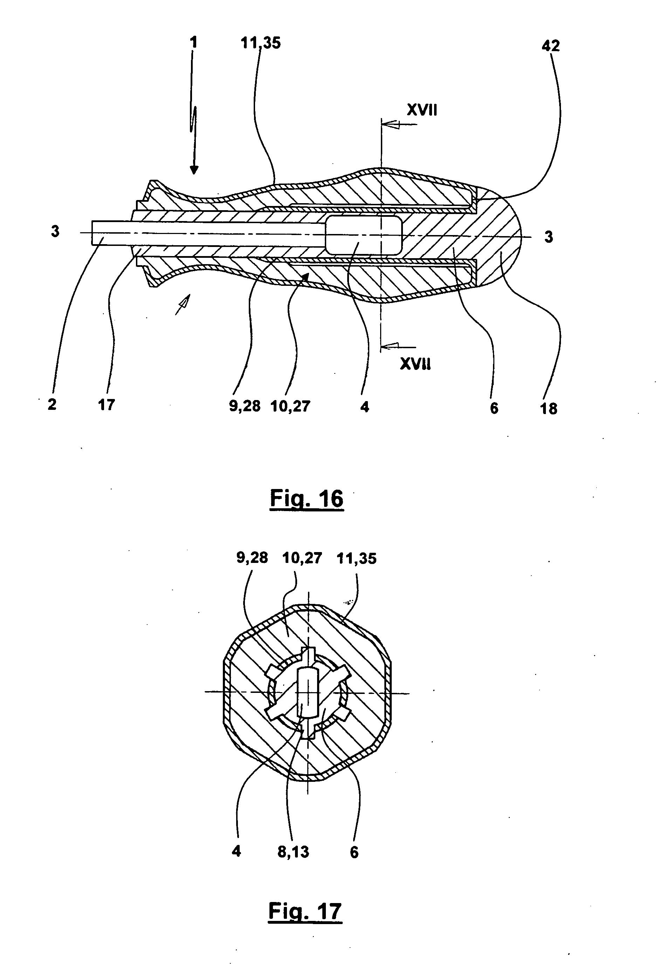

- **Fig. 16 und 17**: zeigen eine Ausführungsform eines Griffs in einem Längsschnitt und einem Querschnitt mit einer äußeren weichen Schicht, die von einer Mantelschicht aus einem härteren Material ummantelt ist, sowie einer inneren härteren Schicht, die eine Griffkernummantelung ausbildet, in der stoffschlüssig ein grundsätzlich runder Griffkern mit sechs gleichmäßig über den Umfang verteilten Rippen aufgenommen ist.

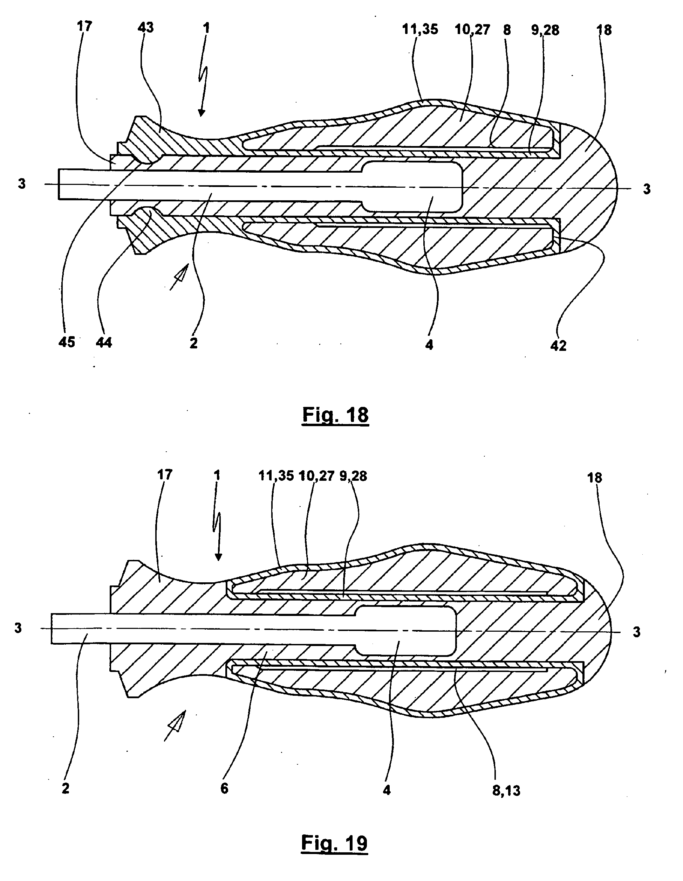

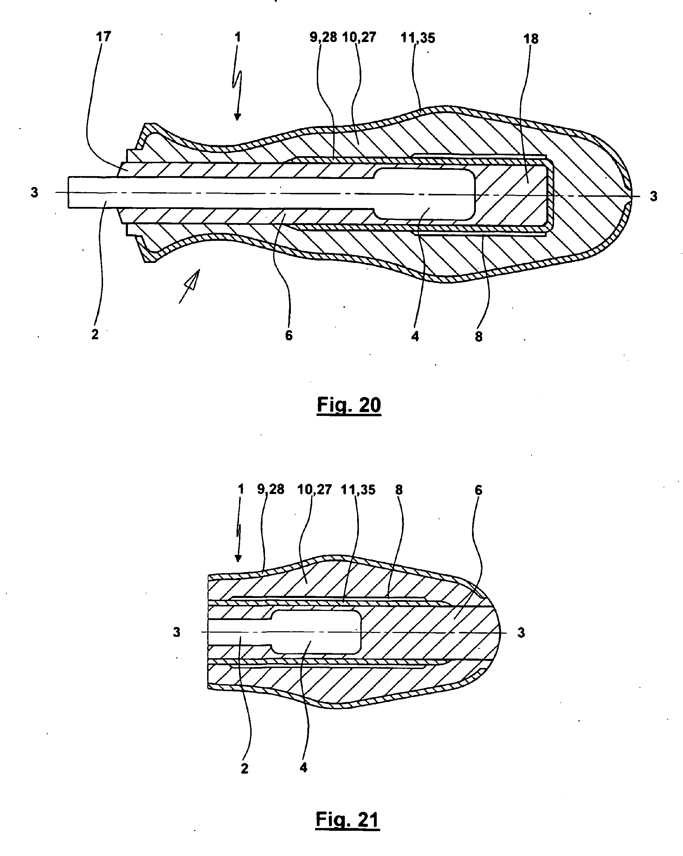

- **Fig.18 und 21**: zeigen Ausführungsformen eines Griffs in einem Längsschnitt, die jeweils einen Querschnitt ungefähr entsprechend Fig. 17 im Bereich des maximalen äußeren Durchmessers des Griffes aufweisen, aber unterschiedliche Ausbildungen der Mantelschicht, der äußeren Schicht, der inneren Schicht und des Griffkernes in axialer Richtung besitzen.

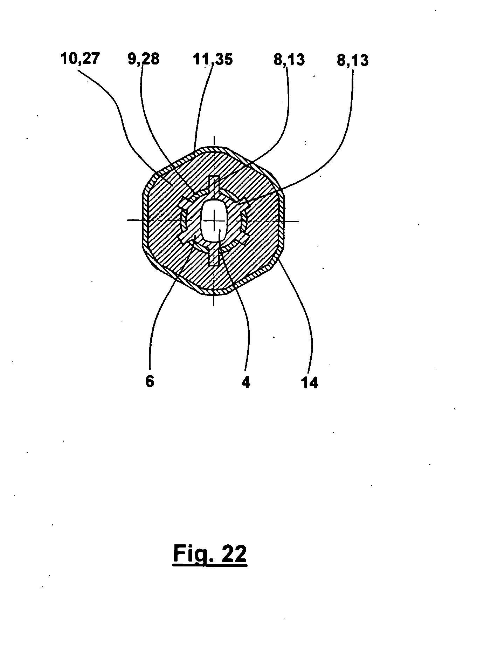

- **Fig. 22**: zeigt eine Ausführungsform eines Griffs in einem Querschnitt, der im Wesentlichen der in Figur 17 dargestellten Ausführungsform entspricht, allerdings mit Rippen unterschiedlicher radialer Abmessungen.

### FIGURENBESCHREIBUNG

### I. Allgemeines

Im Folgenden bezeichnet beispielsweise eine äußere Schicht eine Schicht eines Griffes, deren äußere Mantelfläche die vom Hand eines Benutzers beaufschlagte Mantelfläche des Griffes bildet, während eine innere Schicht radial nach innen an die äußere Schicht anschließt und einen Griffkern ummantelt, der aus Hartkunststoff besteht und einen Schaft ummantelt. Ebenfalls möglich ist, dass die äußere Schicht im Inneren des Griffes liegt und beispielsweise von einer Mantelschicht ummantelt ist und/oder zwischen innere Schicht und Griffkern mindestens eine Innenschicht, Griffkernummantelung oder ähnliches zwischengeordnet ist.

Die Erfindung betrifft einen Griff 1 für ein Werkzeug, in dem ein Schaft 2 eines Funktionsteils des Werkzeugs radial innenliegend aufgenommen ist und auf den im Bereich seiner radial außenliegenden Mantelfläche ein Benutzer des Werkzeugs Kräfte aufbringen kann, wobei es sich um Kräfte in Richtung einer Längsachse 3-3, quer zu dieser, Torsionsmomente um die Längsachse 3-3 und/oder Biegemomente quer zu der Längsachse handeln kann. Der erfindungsgemäße Griff findet insbesondere Einsatz für ein Werkzeug, bei dem über den Griff Torsionsmomente um die Längsachse 3-3 übertragen werden müssen als ein Haupt- oder Nebenzweck des Werkzeugs, zum Beispiel bei einem Schraubendreher.

Derartige Werkzeuge unterscheiden sich insbesondere von den eingangs aufgelisteten Stoß- oder Schlagwerkzeugen:
Bei der Bedienung eines Schlagwerkzeugs wird das Schlagwerkzeug von dem Benutzer in einer Ausholbewegung beschleunigt und mit einem Impuls versehen. Für eine derartige Beschleunigung des Schlagwerkzeugs ist die Steifigkeit eines Schlagwerkzeugs unerheblich, so dass das Schlagwerkzeug gleichermaßen für einen weichen Griff wie für einen harten Griff adäquat beschleunigt und dem zu hämmernden Objekt zugeführt werden kann. Mit dem genannten Impuls trifft das Schlagwerkzeug auf das zu schlagende Objekt, wobei der Impuls des Schlagobjekts auf das zu schlagende Objekt übertragen wird. Der auf das zu schlagende Objekt ausgeübte Impuls ist dabei davon unabhängig, ob das Schlagwerkzeug bei dem Stoß fest gehalten wird, auf das Objekt gepresst wird oder "frei zurückschwingen" kann. Demgemäß presst ein Fachmann beim Schlagen mit einem Schlagwerkzeug dieses nicht auf das zu schlagende Objekt, sondern lässt das Schlagwerkzeug für die Übertragung des Impulses auf das zu schlagende Objekt eher frei zurückschwingen. Dies bedeutet, dass für das Auftreffen die Hand des Benutzers nicht zwingend eng und steif um den Griff geschlossen werden muss, sondern auch für diese Phase ein beliebig weicher und elastischer Griff zum Einsatz kommen kann. Während und in zeitlicher Umgebung des eigentlichen Stoßes überträgt damit der Benutzer im Wesentlichen seitliche Führungskräfte über den Griff auf das Schlagwerkzeug. Um die Übertragung von Stößen auf die Hand des Benutzers, auch bei einem "fehlerhaften", festen Umschließen des Griffs, zu mindern oder zu vermeiden, schlagen die eingangs genannten Druckschriften für Schlag- oder Stoßwerkzeuge vor, dass der Griff weiche oder elastische Bestandteile aufweist, die insbesondere in Stoßrichtung, also auf der Oberseite sowie auf der Unterseite vorgesehen werden, um eine gezielte Elastizität in Stoßrichtung herbeizuführen. Damit beruhen Ausgestaltungen von Griffen für Stoß- und Schlagwerkzeuge auf der Erkenntnis, den Griff gerade in Richtung der zu übertragenden Kräfte, nämlich in Richtung des Stoßes, elastisch, gedämpft und weich auszubilden. Eine derartige Ausgestaltung für Griffe, mit denen Momente um die Längsachse übertragen werden sollen, führt zu in der Praxis nicht einsetzbaren Werkzeugen.

Grundsätzlich besitzt ein erfindungsgemäßer Griff radial innenliegend einen Schaft 2, der einen unrunden Übertragungsquerschnitt 4 oder von einem runden Querschnitt ausgehende Rippen besitzen kann. Der Schaft 2 ist von einem Griffkern 6 teilweise oder vollständig ummantelt, wobei sich Teile des Übertragungsquerschnitts 4 oder der Rippen des Schafts durch den Griffkern 6 radial nach außen erstrecken können. Der Griffkern 6 ist vorzugsweise im Bereich seiner Außenfläche ebenfalls unrund ausgebildet mit einem Übertragungsquerschnitt 7 oder Rippen 8. Der Griffkern 6 kann von einer Griffkernummantelung 9 teilweise oder vollständig umgeben sein, wobei sich ebenfalls Teilbereiche der Übertragungsquerschnitte 7 oder der Rippen 8 durch die Griffkernummantelung 9 erstrecken können. Weiterhin vorgesehen ist eine die Griffkernummantelung 9 zumindest teilweise umgebende weiche Schicht 10, die zumindest teilweise von einer Außenschicht 11 ummantelt sein kann. Griffkernummantelung 9, weiche Schicht 10 und/oder Außenschicht 11 können Rippen, Vorsprünge, Fortsätze oder Stege (im Folgenden Rippen 8,13) aufweisen, die sich lediglich teilweise in eine benachbarte Schicht (10, 11, 27) erstrecken und im Bereich welcher eine radiale Erstreckung einer benachbarten Schicht verringert ist. Die Rippen 13 können dabei sowohl radial nach innen als auch radial nach außen von einer die Rippen tragenden Schicht orientiert sein.

Sämtliche vorgenannten Bestandteile eines Griffs 1 können alternativ oder kumulativ eingesetzt werden. Ebenfalls eine Zwischenordnung zusätzlicher weiterer Schichten, loser Partikel, eines Gels oder eines Fluids ist ebenfalls möglich.

Neben den genannten Bestandteilen des Griffs 1 kann der Griff 1 zusätzliche Bestandteile aufweisen wie beispielsweise ein Auge 15 oder Querloch, insbesondere im dem Funktionsteil abgewandten Endbereich des Griffs 1, wobei sich das Auge 15 quer zur Längsachse 3-3 durch den Endbereich erstreckt. Über ein Auge 15 kann das Werkzeug aufgehängt werden oder ein Hilfselement in den Griff 1 eingesteckt werden. Beispielsweise kann ein Schaft eines weiteren Schraubendrehers durch das Auge 15 durchgeführt werden kann, über den dann ein zusätzliches Betätigungsmoment auf den Griff 1 ausgeübt werden kann.

Die Bestandteile des Griffs 1 können stoffschlüssig aneinander angebunden sein. Ebenfalls denkbar ist der Einsatz eines auswechselbaren Funktionsteils mit einem Griff, in den der Schaft 2 des Funktionsteiles, insbesondere mit umgebenden Schichten, gegenüber weiteren, radial außenliegenden Bestandteilen des Griffs auswechselbar eingesetzt ist. Insbesondere im Zusammenhang mit derartigen auswechselbaren Funktionsteilen kann der Griff 1 über zusätzliche Haltevorrichtungen verfügen, s. bspw. die Patentanmeldungen mit den Anmelde-Nummern EP 05 003 219.2 und EP 05 017 193.3. Weiterer optionaler Bestandteil eines Griffes ist eine Kuppe oder Kappe im Endbereich des Griffes, über die Stöße oder Schläge auf den Griff aufbringbar sind.

Bei der erfindungsgemäßen "äußeren Schicht" 27 kann es sich um eine beliebige Schicht der Schichten 9 (10) oder [11] handeln, während die "innere Schicht" 28 eine innenliegend an die vorgenannte Schicht angebundene Schicht, nämlich Griffkem 6 (Griffkernummantelung 9) oder [Schicht 10], sein kann.

Für die äußere Schicht 27 sind beliebige konstante oder veränderliche radiale Erstreckungen möglich, die sich aus der Differenz der angrenzenden Konturen der benachbarten Schichten ergibt. Die radiale Erstreckung kann sich im axialen Verlauf über die Grifflänge ändern und zum vorderen Ende des Griffes hin schließlich Null werden. Andererseits hängt die radiale Erstreckung von dem absoluten Durchmesser des Griffes ab.

Radial außenliegend von der äußeren Schicht und/oder radial innenliegend von der inneren Schicht angeordnete Schichten oder Bestandteile können formschlüssig, stoffschlüssig reibschlüssig und/oder ein Rast- oder Sperrverbindung miteinander und an die innere und äußere Schicht angebunden sein.

Für eine im Folgenden als "erste Bauform" bezeichnete Grundgestaltung ist mit der weichen Schicht 10 zumindest ein Teilbereich einer Mantelfläche 14 des Griffs 1 gebildet, so dass für diese erste Ausgestaltung die Außenschicht 11 entfallen kann. Die Schicht 10 bildet in diesem Fall die äußere Schicht 27. Radial innenliegend von der weichen Schicht 10 ist unmittelbar der Griffkern 6 aus einem härteren Kunststoff oder einem Hartkunststoff angeordnet, der die innere Schicht 28 bildet. Entsprechende Ausführungsformen, die auch als 2-Komponenten-Griffe" bezeichnet werden können, sind in den Figuren 1 bis 7 dargestellt.

Für eine im Folgenden als "zweite Bauform" bezeichnete Grundgestaltung ist die weiche Schicht 10 teilweise oder vollständig im Längsschnitt außen von einer härteren Außenschicht 11 und innen von einer Griffkernummantelung 9 ummantelt. In diesem Fall bildet die Schicht 10 die äußere Schicht 27, die Griffkernummantelung 9 die innere Schicht 28 und die Außenschicht 11 eine Mantelschicht 35. Entsprechende Ausführungsformen sind in den Figuren 11 bis 22 dargestellt.

### II. Materialien

Ein Schaft 2 kann bspw. mit faserverstärktem Kunststoff, Metall, Stahl oder Holz gebildet sein.

Als kostengünstige, aber zuverlässige Materialien für einzelne Bestandteile oder Schichten des Griffes kommt ein harter Kunststoff für den Griffkern 6 zum Einsatz, während für die Griffkernummantelung 9 und die Außenschicht 11 ein erstes weiches Material sowie für die weiche Schicht 10 ein zweites weiches Material zum Einsatz kommt, wobei die beiden weichen Materialien unterschiedliche Härte haben, nämlich das erste Material und die damit gebildete(n) Schicht(en) härter ist als das zweite Material und die damit gebildete(n) Schicht(en).

Mögliche Materialien sind (ohne Einschränkung auf diese) ein thermoplastisches Elastomer (TPE), ein thermoplastisches Polyurethan (TPU), ein thermoplastisches Polyolefin (TPO), Polypropylen, EPDM-Kautschuk, PVC oder Styrol-Block-Copolymer Einsatz. Die genannten Materialien haben eine poröse, vorzugsweise aber eine geschlossene, nicht poröse Struktur. Eine Härte eines eingesetzten Kunststoffes, insbesondere für eine weiche Schicht 10 oder äußere Schicht 27, beträgt bspw. 10 bis 40 Shore A. Für eine härtere Schicht, beispielsweise den Griffkern 6, eine Griffkernummantelung 9 und/oder eine Außenschicht 11 (innere Schicht 28; Mantelschicht 35) findet insbesondere ein Kunststoff Einsatz mit einer Härte zwischen 30 und 105 Shore A, vorzugsweise zwischen 30 bis 85 Shore A. Der Griffkern 6 wird vorzugsweise aus Hartkunststoff, zum Beispiel Polypropylen mit einer Kugeldruckhärte von 45 - 65 N/mm², hergestellt.

Ebenfalls möglich ist, dass zumindest eine Schicht einen Füllstoff aufweist. Als mögliche Füllstoffe kommen ein Granulat wie ein Korkgranulat, Korkmehl, Holzmehl oder ein faserartiger Füllstoff wie Glasfasern in Betracht. Der Gewichtsanteil des Füllstoffs am Gesamtgewicht der beteiligten Schicht oder des beteiligten Bestandteils des Griffs liegt bspw. unter 50 %, insbesondere zwischen 5 und 30 %.

Neben einer Variation der Steifigkeit über die Wahl des Materials können Schichten oder Bestandteile unterschiedlicher Steifigkeit mit gleichen Materialen, aber unterschiedlichen Porositäten gebildet sein. Im Extremfall ist eine weichere Schicht oder ein weicherer Bestandteil porös ausgebildet, während eine härtere Schicht oder ein härterer Bestandteil nicht porös ausgebildet ist. Einsatz finden kann ein Kunststoff mit einem Raumgewicht von insbesondere zwischen 0,2 gr/ccm und 0,8 gr/ccm bei einer porösen Ausbildung der hiermit gebildeten Schicht. Bei nicht poröser Ausbildung kann das Raumgewicht bspw. zwischen 0,7 gr/ccm und 1,3 gr/ccm liegen.

### III. Herstellungsverfahren

Für die Fertigung der Griffe kommen grundsätzlich die folgenden Herstellungsverfahren in Betracht:
Für ein erstes Herstellungsverfahren wird beginnend von innen der Griff sukzessive durch Einlegen in radial größer werdende Formkavitäten hergestellt, in die dann jeweils ein Material für eine Schicht eingespritzt wird. Beispielsweise wird der Schaft 2 in eine erste Form eingelegt, deren Innenkontur der Kontur des Griffkerns 6, ggf. mit einem Übertragungsquerschnitt 7 und Rippen 8, entspricht. Hieran anschließend kann ein Material in die erste Form eingespritzt werden. Nach einem Aushärten des Griffkerns 6 kann der mit dem Griffkern 6 ummantelte Schaft 2 in weitere Formen eingelegt werden, mit denen dann sukzessive radial nach außen wahlweise mit weiteren Schichten 9, 10, 11 der Griff 1 erstellt wird.

Für ein zweites Herstellungsverfahren wird zumindest eine Schicht dadurch gefertigt, dass in eine Form Kerne eingelegt werden, die dann in der Form mit einem Material umspritzt werden. Werden die Kerne nach dem Aushärten des Materials entfernt, kann in sich ergebende, sich teilweise in Umfangsrichtung erstreckende oder in Umfangsrichtung umlaufende "Kammern" ein weiteres Material eingespritzt werden. Beispielsweise wird in die Kammern ein weicheres Material eingespritzt, welches dann die weiche Schicht 10 bildet.

Für ein drittes Herstellungsverfahren wird der Griff 1 mit zumindest zwei Bestandteilen gefertigt, wobei ein radial außenliegend in dem Griff 1 angeordneter Bestandteil mit einer inneren Ausnehmung hergestellt wird, im Bereich dessen ein Fügen des Bestandteils mit einem radial innenliegenden Bestandteil möglich ist. Über Rippen 8, 13 kann trotz der u. U. nicht stoffschlüssigen Verbindung eine Übertragung eines Torsionsmoments zwischen den Bestandteilen erfolgen. Ebenfalls möglich ist die Herstellung einer stoffschlüssigen Verbindung nach oder mit einem Fügen der mindestens zwei Bestandteile. Eine Sicherung der Bestandteile kann nach einem Fügen der Bestandteile auch über eine reibschlüssige oder formschlüssige Verbindung, eine elastische Rastverbindung oder eine Sperrverbindung erfolgen.

Für ein viertes Herstellungsverfahren, welches auch als "Sandwichverfahren" oder "Intervallverfahren" bezeichnet wird, wird ein mit einem ausgehärteten Griffkern 6 ummantelter Schaft 2 in eine Form eingelegt, die in einer Mittenebene, die durch die Längsachse 3-3 verläuft, geteilt ist. Die Innenkontur der Form entspricht der Form der Mantelfläche des fertigen Griffs 1. Radial oder axial in eine Kammer, die zwischen Form und Griffkern 6 gebildet ist, mündet mindestens eine Eintrittsöffnung. Über die Eintrittsöffnung wird in die Form und die Kammer zunächst ein erstes Material eingespritzt. Das Volumen des eingespritzten ersten Materials ist kleiner als das der Kammer. Das erste Material wird auf die Mantelfläche des Griffkerns 6 aufgespritzt und/oder in Richtung der die Formkavität begrenzenden Wandung umgelenkt und von dieser abgekühlt, so dass benachbart dem Griffkern 6 und/oder im Bereich der die Formkavität begrenzenden Wandung das erste Material schneller aushärtet oder dickflüssiger wird als in anderen Teilbereichen. Anschließend und vor einem endgültigen Aushärten des ersten Materials wird über eine Eintrittsöffnung ein zweites Material in die Kammer und in, unter oder durch das erste Material eingespritzt. Von der Eintrittsöffnung fließt das zweite Material in das Innere des ersten Materials oder unter dieses. Mit zunehmendem Einspritzen wird das erste Material räumlich in Richtung der Längsachse 3 sowie radial zur Wand der Formkavität verdrängt, wobei das zweite Material sowohl radial nach außen als auch radial nach innen als auch in beide axiale Richtungen von dem ersten Material ummantelt sein kann. Das zweite Material drängt das erste Material radial nach außen, so dass dieses die Außenschicht bildet. Entsprechend erfolgt eine Bewegung oder Verdrängung des ersten Materials in Richtung des Griffkernes 6, so dass hier die Griffkernummantelung 9 von dem ersten Material ausgebildet wird. Beispielsweise ist eine Fertigung der zweiten Bauformen mit einem derartigen Herstellungsverfahren möglich.

Ein Schäumen für eine etwaige poröse Ausbildung erfolgt vorzugsweise mittels eines Treibmittels oder durch Einarbeiten von Stickstoff in eine Schmelze eines im Spritzgussverfahren verarbeiteten Kunststoffes. Die Schichten 9, 10, 11 können aus Kunststoff eines Typs hergestellt sein und sich bei einer Fertigung des Griffes in einem derartigen Integralschaum-Verfahren ergeben. Dabei bilden sich die Schichten 9 und 11 unter Einwirkung des bei Wirken eines Treibmittels entstehenden Innendrucks als dichte, nicht oder kaum poröse Schichten mit einer höheren Festigkeit als die dazwischen liegende Schicht 10, die porös bleibt.

### IV. Ausführungsbeispiele von Griffen für Werkzeuge

In einer ersten Ausführungsform gemäß Fig. 1 und 2 ist ein Schaft 2 von einem Griffkern 6 ummantelt, der Endbereiche 17, 18 sowie einen Mittenbereich 26 besitzt. Der Mittenbereich 26 weist eine im Wesentlichen zylinderförmige Mantelfläche auf. Von dem Griffkern 6 erstrecken sich, einstückig von diesem ausgebildet, Rippen 8, 13, die in dem dargestellten Querschnitt in 12-Uhr-Position sowie 6-Uhr-Position angeordnet sind. Die Rippen 8 sind von einer weichen Schicht 10 in Umfangsrichtung durchgehend ummantelt. Die Rippen 8 erstrecken sich derart in die weiche Schicht 10, dass deren radiale Erstreckung zwischen der außenliegenden Stirnfläche der Rippen auf ca. 1/3 reduziert ist. Die maximale radiale Erstreckung 38 der Schicht 10 abseits der Rippen 8 beträgt ca. 30 bis 60% eines Radius 31 des Griffes 1 im Bereich seiner dicksten Stelle. Die weiche Schicht bildet die äußere Schicht 27, während der Griffkern 6 die innere Schicht 28 bildet. Die Mantelfläche 14 des Griffes 1 kann hexagonal mit abgerundeten Ecken ausgebildet sein.

In dem in Fig. 1 dargestellten Längsschnitt ist zu erkennen, dass die Außenkontur der Rippen 8 ungefähr parallel zu der Außenkontur der Mantelfläche 14 verläuft, so dass der radiale Abstand zwischen der radial außenliegenden Stirnseite der Rippen 8 und der Mantelfläche 14 des Griffes 1 in Richtung der Längsachse 3-3 ungefähr konstant ist. Die Rippen 8 erstrecken sich lediglich über einen axialen Teilbereich der äußeren Schicht 27, so dass in einem vorderen Bereich des Griffs 1 die äußere Schicht 27 umlaufend unmittelbar stoffschlüssig an den Griffkern 6 angebunden ist.

Die Rippen 8 können, wie in Fig. 1 skizziert, gegenüberliegend angeordnet sein oder in Umfangsrichtung versetzt angeordnet sein. In der Darstellung hat die Rippe einen rechteckigen Querschnitt. Alternativ kann die Rippe auch eine andere Form besitzen, etwa leicht konisch sein, an der Oberkante abgerundet oder in der Dicke auch geringer.

Während die äußere Abmessung der Rippen 8 von der Längsachse 3-3 mit Bezugszeichen 30 gekennzeichnet ist, ist der Radius der Mantelfläche 14 des Griffs 1 im Umfangsbereich der Rippe 8 mit Bezugszeichen 31 gekennzeichnet. Zumindest in einem Teilbereich der Längserstreckung 29 des Griffs 1 ist das Verhältnis des Radius 30 der Rippe 8 zum Radius 31 der Mantelfläche 14 zumindest 0,5. Das Raumgewicht des Kunststoffs für die äußere Schicht 27 bei Ausbildung als poröse Schicht liegt vorzugsweise zwischen 0,2 und 0,8 g/ccm. Eine Ausgangshärte des verwendeten Kunststoffs für die äußere Schicht 27 liegt insbesondere zwischen 30 und 96 Shore A oder 30 bis 60 Shore D. Vorzugsweise liegt die Härte im Bereich zwischen 25 und 75 Shore A, beispielsweise 35 bis 55 Shore A. Für eine besondere Ausführungsform der Erfindung beträgt die radiale Erstreckung der äußeren Schicht 27 an der Stelle des größten Durchmessers des Griffs 1 wenigstens 4 mm, insbesondere mehr als 6 mm oder 8 mm. Die Wahl dieser radialen Erstreckung ist abhängig von der Griffgröße: bei einem kleinen Griff ist die radiale Erstreckung kleiner als bei einem größeren Griff

Figuren 3 und 4 zeigen eine Ausführungsvariante, für die der Griffkern 6 und damit die innere Schicht 28 mit einem rechteckförmigen Querschnitt ausgebildet ist, hier mit abgerundeten Ecken. Darüber hinaus ist im Bereich der Mitten der längeren Seiten der rechteckigen Kontur des Griffkernes 6 die maximale radiale Erstreckung 38 der äußeren Schicht 27 größer als für das in Figuren 1 und 2 dargestellte Ausführungsbeispiel ist, insbesondere zwischen 60 und 80% des Radius des Griffes an der dargestellten Stelle, während die minimale Erstreckung 39 maximal 60% oder die Hälfte der maximalen Erstreckung 38 hat.

Für das in Fig. 5 und 6 dargestellte Ausführungsbeispiel ist der Schaft 2 mit einem Griffkern 6 ummantelt, der Endbereiche 17, 18 aufweist, wobei der Endbereich 18 eine Kappe ausbildet, die Teil der Mantelfläche 17 des Griffs 1 ist. Weiterhin besitzt der Griffkern 6 vier in Umfangsrichtung gleichmäßig verteilte Rippen, die sich ungefähr über die Längserstreckung 29 erstrecken. Der Griffkern 6 bildet die innere Schicht 28. Eine weiche Schicht 10, die die Mantelfläche 14 ausbildet, ist gleichzeitig die äußere Schicht 27. Die äußere Schicht 27 umgibt den Griffkern 6 im Mittenbereich 26 und ist in axialer Richtung eingeschlossen von den Endbereichen 17, 18. Das Verhältnis des größten Durchmessers 32 des Griffs 1 zu dem Durchmesser 31 des runden Teilbereichs der Mantelfläche des Griffkerns 6 ist vorzugsweise größer als 1,4, insbesondere größer als 1,8, wobei die radiale Erstreckung der äußeren Schicht 27 vorzugsweise größer als 4 mm ist, insbesondere größer als 6 mm. Bei dem dargestellten, ungefähr birnenförmig gestalteten Griff 1 eines Schraubendrehers nimmt die Dicke der äußeren Schicht 27 zum vorderen Ende des Griffs und damit auch dessen Verformbarkeit ab. Die äußere Schicht 27 kann mit einer geschlossenen Struktur oder aber mit einer porösen Struktur gefertigt sein, wobei die Ausgangshärte des eingesetzten Kunststoffs zwischen 45 und 96 Shore A liegen kann und das Raumgewicht der porösen Struktur zwischen 0,2 g/ccm und 0,9 g/ccm. Die maximale radiale Erstreckung 38 der äußeren Schicht beträgt ca. 50 bis 65 % des Radius des Griffes, während die minimale radiale Erstreckung 39 ca. 35 bis 50% beträgt.

Für ein in Fig. 7 dargestelltes Ausführungsbeispiel eines Griffs 1 ist die innere Schicht 28, die mit dem Griffkern 6 gebildet ist, sternförmig mit sechs Zacken ausgebildet, so dass die äußere Schicht 27 in den Positionen 12 Uhr, 2 Uhr, 4 Uhr, 6 Uhr, 8 Uhr, 10 Uhr minimale radiale Erstreckungen 39 sowie in Umfangsrichtung mittig dazwischen angeordnete maximale radiale Erstreckungen 38 besitzt.

In Fig. 8 sind mögliche radiale Erstreckungen der äußeren Schicht 27 als Funktion des Umfangswinkels α dargestellt (zur Definition des Umfangswinkels s. bspw. Fig. 12). Hierbei kann der Verlauf 36 beispielsweise einer Ausführungsform gemäß Fig. 2 oder 4 entsprechen, während ein Verlauf 37 der Ausführungsform gemäß Fig. 7 entsprechen kann.

Ausgehend von der 3-Uhr-Position (α = 0°) verändert der Verlauf 36 infolge der ungefähr hexagonalen Außenkontur der Mantelfläche 14 zunächst die radiale Erstreckung der äußeren Schicht 27 geringfügig im Bereich eines Maximums 38, um dann im Bereich der Rippe 8, 13 in 6-Uhr-Stellung (90°) abrupt auf eine minimale radiale Erstreckung 39 abzufallen. Ein zweiter Abfall auf eine minimale radiale Erstreckung 39 ist im Bereich der 12-Uhr-Position (α = 270°) gegeben.

Für sternförmige Griffkerne 6 oszilliert die radiale Erstreckung gemäß Verlauf 37 zwischen maximalen radialen Erstreckungen 38 und minimalen radialen Erstreckungen 39, wobei der Abstand der Maxima 38 und Minima 39 durch die Erstreckung der Zacken des Sterns beeinflusst werden kann.

Das in den Fig. 9 und 10 dargestellte Ausführungsbeispiel besitzt einen Griffkern 6 mit zugeordneten, gegenüberliegenden Rippen 8, 13, die unmittelbar mit einer weichen Schicht 10 ummantelt sind. Die weiche Schicht 10 ist radial außenliegend von der Außenschicht 11 ummantelt. Die Dicke der Außenschicht 11 liegt für eine derartige Ausgestaltung vorzugsweise, je nach Griffgröße im Bereich zwischen 2 und 7 mm. Die maximale radiale Erstreckung 39 der mit der weichen Schicht 10 gebildeten äußeren Schicht 27 liegt im Bereich zwischen 30 %und 50 % des Radius des Griffes 1, während die minimale radiale Erstreckung 39 ungefähr die Hälfte der maximalen radialen Erstreckung 38 beträgt. Die Härte der Schicht 10 liegt zwischen 10 und 40 Shore A, vorzugsweise 15 bis 35 Shore A, während die Härte der Schicht 11 zwischen 25 und 75 Shore A, insbesondere 35 bis 55 Shore A liegt

Der Griff in der in Fig. 11 und 12 dargestellten Ausführungsform ist wie folgt aufgebaut: ein Schaft 2 ist von einem Griffkern 6 ummantelt, der Endbereiche 17, 18 sowie einen Mittenbereich 26 besitzt. Der Mittenbereich 26 weist eine im Wesentlichen zylinderförmige Mantelfläche auf, die von einer Griffkernummantelung 9 ummantelt ist. Von dem Griffkern 6 erstrecken sich, einstückig von diesem ausgebildet, Rippen 8 durch die Griffkernummantelung 9 hindurch, wobei für den in Fig. 12 dargestellten Querschnitt die Rippen 8 in 12-Uhr-Position sowie 6-Uhr-Position angeordnet sind. Die Rippen 8 und die Griffkernummantelung 9 sind von einer weichen Schicht 10 in Umfangsrichtung durchgehend ummantelt, wobei die weiche Schicht 10 wiederum von einer Außenschicht 11, die in Umfangsrichtung umlaufend ausgebildet ist und die Mantelfläche 14 bildet, ummantelt ist. Die weiche Schicht 10 bildet eine äußere Schicht 27 aus einem weichen Kunststoff, an der außenliegend mit der Außenschicht 11 eine äußere härtere Mantelschicht 35 stoffschlüssig angebunden ist. Eine zusätzliche Schicht 9 aus dem Material der Mantelschicht 35 bildet eine innere Schicht 28 in Form einer Griffkernummantelung 9. An den Griffkern 6 sind Rippen 8 einstückig angesetzt. In dem in Fig. 11 dargestellten Längsschnitt ist zu erkennen, dass die Außenkontur der Rippen 8 ungefähr parallel zu der Außenkontur der Mantelfläche 14 verläuft, so dass die radiale Erstreckung der äußeren Schicht 27 des Griffes 1 in Richtung der Längsachse 3-3 ungefähr konstant ist. Die Rippen 8 erstrecken sich lediglich über einen axialen Teilbereich der äußeren Schicht 27, so dass in einem vorderen Bereich des Griffs 1 die äußere Schicht 27 umlaufend unmittelbar stoffschlüssig an die Griffkernummantelung 9 angebunden ist. Die Rippen 8 können, wie in Fig. 11 skizziert, gegenüberliegend angeordnet sein oder abweichend in nicht dargestellter Weise in Umfangsrichtung versetzt angeordnet sein. In der dargestellten Ausführungsform haben die Rippen 8 einen rechteckigen Querschnitt, wobei diese abweichend auch eine beliebige andere Form haben können, etwa leicht nach außen zulaufend, an der Oberkante abgerundet oder in der Dicke auch geringer ausgebildet.

Für die Mantelschicht 35 oder Außenschicht 11 hat sich die Verwendung eines Kunststoffes mit einer Härte von 30 bis 85 Shore A, vorzugsweise von 40 bis 60 Shore A als zweckmäßig erwiesen - für die weiche Schicht 10 oder äußere Schicht 27 eine Härte von 10 bis 55 Shore A, vorzugsweise von 15 bis 30 Shore A. Es können Kunststoffe gleichen Typs oder verschiedener Typen verwendet werden, sofern diese eine gute stoffliche Verbindung miteinander eingehen. U. U. ist auch für eine gute stoffschlüssige Verbindung zwischen einer Oberkante der Rippe 8 und der äußeren Schicht 27 Sorge zu tragen.

Fig. 13 und 14 zeigen eine weitere Ausführungsform eines Griffs 1, bei der bei ansonsten Fig.11 und 12 entsprechender Ausgestaltung der Griffkern 6 ohne Rippen 8 ausgebildet ist. Stattdessen ist zumindest in einem Teilbereich der Griffkern 6 mit einem ungefähr rechteckförmigen Querschnitt gebildet ist, der in Umfangsrichtung vollständig von der Griffkernummantelung 9 umgeben ist. Ein derartiger rechteckiger Querschnitt des Griffkerns 6 erstreckt sich ungefähr über die Längserstreckung 29, vorzugsweise mit variierendem Verhältnis der Länge zur Breite des Rechtecks bzw. abnehmender Länge des Rechtecks.

Für ein in Fig. 15 dargestelltes weiteres Ausführungsbeispiel eines Griffs 1 ist die äußere Schicht 27, die mit der weichen Schicht 10 gebildet ist, sternförmig mit sechs Zacken entsprechend einer derartigen Außenkontur des Griffkerns 6 und der Griffkernummantelung 9, die die innere Schicht 28 bildet, ausgebildet. Die äußere Schicht 27 besitzt in den Positionen 12 Uhr, 2 Uhr, 4 Uhr, 6 Uhr, 8 Uhr, 10 Uhr eine minimale radiale Erstreckung.

Fig. 16 und 17 zeigen ein Ausführungsbeispiel eines Griffs, bei dem ein Griffkern 6 mit Endbereichen 17, 18 ausgebildet ist, wobei der Endbereich 18 eine Kappe zur Aufbringung von Axialkräften durch eine Hand des Benutzers bildet. Der Griffkern 6 besitzt sechs gleichförmig über den Umfang verteilte Rippen 13. Für das dargestellte Ausführungsbeispiel sind die Außenschicht 11 und die Griffkernummantelung 9 über einen radialen Steg 42, der für das dargestellte Ausführungsbeispiel in Umfangsrichtung umlaufend ausgebildet ist als kreisringförmiger Bund, miteinander verbunden, so dass mit der Griffkernummantelung 9, dem Steg 42 und der Außenschicht 11 im Halblängsschnitt ein liegendes, nach vorne offenes U gebildet ist. Der innenliegende Schenkel des U, welcher die Griffkernummantelung 9 bildet, ist kürzer ausgebildet als der außenliegende, die Mantelfläche 14 bildende Schenkel, der insbesondere ungefähr mit der Längserstreckung 29 ausgebildet ist. Die Griffkernummantelung 9 ist von den Rippen 8, 13 durchsetzt. Zwischen Griffkernummantelung 9 und Außenschicht 11 ist eine weiche Schicht 10 angeordnet, die eine äußere Schicht 27 bildet. Der Griffkern 6 ist aus einem harten Kunststoff gebildet, der eine erste Steifigkeit definiert. Mit den Endbereichen 17 und 18 liegt während einer Fertigung des Griffs 1 der Griffkern 6 dichtend an der Wand einer Formkavität an, wenn die Griffkernummantelung 9 (innere Schicht 28) und die weiche Schicht 10 (äußere Schicht 27) hergestellt werden durch Aufspritzen auf den Griffkern 6.

Eine Fertigung des Griffs 1 gemäß Figur 18 erfolgt derart, dass zunächst der Griffkern 6 in einer ersten Spritzgießform gefertigt wird, wobei der Schaft 2 in den Griffkern 6 eingegossen wird. In einer zweiten Spritzgießform werden die Griffkernummantelung 9, die weiche Schicht 10 und die Außenschicht 11 auf den in die Form eingelegten Griffkem 6 aufgespritzt gemäß dem beschriebenen Sandwichverfahren. Zuerst wird das die Griffkernummantelung 9 (innere Schicht 28), den Steg 42 und die Außenschicht 11 bildende erste Material in die Form eingespritzt und unmittelbar danach vor einem Aushärten die die weiche Schicht 10 (äußere Schicht 27) bildende Kunststoffmasse, das zweite Material, eingespritzt. Das zweite Material verdrängt das zuerst eingespritzte, noch (teilweise) flüssige erste Material an die Wandung der Formkavität bzw. an die Wandung des Griffkerns 6, wodurch die Griffkernummantelung 9, der Steg 42 und die Außenschicht 11 ausgebildet werden. Durch einen derartigen Verfahrensablauf wird erreicht, dass sich an der Oberfläche des Griffs 1 die Außenschicht 11 als dichte Schicht ausbilden kann. Die Dicke dieser Schicht kann durch den Verfahrensablauf, beispielsweise das Verhältnis und die Dosierungsmengen der Materialien und/oder die Parameter des Spritzgießvorgangs gesteuert werden. Die Dicke der Schicht wird in jedem Fall so eingestellt, dass eine radiale Verformbarkeit der Außenschicht 11 und der weichen Schicht 10 bei Einwirken einer Kraft durch die den Griff 1 umschließende Hand beim Arbeiten nicht gemindert wird, aber andererseits eine gute Übertragung eines eingeleiteten Torsionsmoments gewährleistet ist, wie es z. B. bei Verwendung eines derartigen Griffs für einen Schraubendreher erforderlich ist.

Eine Herstellung eines derartigen Griffs 1 kann alternativ durch separate Herstellung
- eines Bestandteils mit einer Art Griffhülse mit dem Endbereich 43, der Griffkernummantelung 9 (innere Schicht 28), der weichen Schicht 10 (äußere Schicht 27) und der Außenschicht 11 (Mantelschicht 35) sowie
- eines weiteren Bestandteils mit dem mit dem Griffkern 6 ummantelten Schaft 2
erfolgen. Hierbei wird in den erstgenannten Bestandteil eine zentrale, in Richtung der Längsachse 3-3 verlaufende Höhlung eingeformt, bspw. mit einem entsprechenden Formkern, die einen unrunden Querschnitt aufweisen kann zur Herstellung einer formschlüssigen Verbindung mit einer entsprechenden Mantelfläche des Griffkerns 6, beispielsweise zur Aufnahme von Rippen 8, 13. Alternativ kann die Höhlung einen Sechskantquerschnitt oder einen runden Querschnitt mit eingeformten, in Längsrichtung verlaufenden Taschen besitzen. Um den Formkern zur Herstellung der Höhlung bildet sich, wie zuvor beschrieben, die Griffkernummantelung 9 aus Kunststoff mit höherer Härte aus, die aus dem ersten Material besteht. Der Griffkern 6 besitzt einen korrespondierenden Querschnitt, also insbesondere ebenfalls einen Sechskantquerschnitt oder einen runden Querschnitt mit radial aufgesetzten Rippen 8, 13, die in die Taschen des ersten Bestandteils eingreifen. Über die unrunden Querschnitte kann ein Torsionsmoment übertragen werden. Die Maße und Toleranzen der beiden Querschnitte sind so aufeinander abgestimmt, dass der erste Bestandteil straff passend auf den Griffkern 6 aufgeschoben werden kann. Zweckmäßigerweise können die beiden Bestandteile zusätzlich miteinander verklebt werden. Der Endbereich 43 besitzt über den Umfang verteilte Nasen 44 oder einen umlaufenden Ansatz, der in einer Rastverbindung formschlüssig in einer zugeordneten Nut 45 des Griffkerns 6 aufgenommen ist. Eine derartige Schnappverbindung mit den Nasen 44 und der Nut 45 führt zu einer (u. U. auswechselbaren) axialen Sicherung. Selbstverständlich kann eine Schnappverbindung auch auf andere Weise ausgebildet sein oder eine axiale Sicherung anderer Art vorgesehen sein.

Bei einer in Fig. 19 dargestellten Ausführungsform eines Griffs 1 ist die Mantelfläche 14 mit den radial erweiterten Endbereichen 17, 18 des Griffkernes 6 gebildet. Zwischen den Endbereichen ist ein elastischer Teil des Griffs 1 angeordnet, der mit einer weichen Schicht 10 (äußere Schicht 27) sowie einer im Längsschnitt geschlossenen Ummantelung der weichen Schicht 10 mit der Griffkernummantelung 9 (innere Schicht 28) und der Außenschicht 11 (Mantelschicht 35) gebildet ist. Dieses elastische Griffteil kann entweder zunächst als eigenes Spritzgießteil - ebenfalls im Sandwichverfahren - gefertigt werden und unter elastischer Aufweitung von hinten über den Endbereich 18 auf den Griffkern 6 aufgesteckt werden oder das Griffteil wird im Sandwichverfahren direkt auf den Griffkern 6 aufgespritzt, wie dieses bereits für vorangegangene Ausführungsformen beschrieben worden ist.

Für das in Fig. 20 dargestellte Ausführungsbeispiel ist in dem Griff 1 der Griffkern 6 nicht durchgehend bis zum Ende des Griffs 1 ausgebildet. Vielmehr ist der Endbereich 18 des Griffkerns 6 ebenfalls von der Griffkernummantelung 9 (innere Schicht 28), der weichen Schicht 10 (äußere Schicht 27) und der Außenschicht 11 (Griffkernummantelung 35) ummantelt, so dass die Außenschicht 11 auch die stirnseitige Mantelfläche oder die Kappe bildet. Bei einem Griff gemäß diesem Ausführungsbeispiel ist es zweckmäßig, zumindest eine oder eine einzige Eintrittsöffnung 20 zentral am Ende des Griffes 1 anzuordnen.

Für das in Fig. 21 dargestellte Ausführungsbeispiel ist der Griffkern 6 ohne radiale Verdickung im Endbereich 18 bis zum Endbereich des Griffs 1 durchgeführt.

Fig. 22 zeigt eine im Wesentlichen Fig. 17 entsprechende Ausgestaltung, für die allerdings die Rippen 8,13 mit unterschiedlichen radialen Erstreckungen ausgebildet sind, so dass sich unterschiedliche minimale radiale Erstreckungen ergeben.

Die Erfindung betrifft nicht nur Griffe für verschieden Werkzeuge, sondern auch Werkzeugsätze mit Griffen gemäß den dargestellten Ausführungsformen in unterschiedlichen Größen.

Weitere Abmessungen und Verhältnisse der Abmessungen der einzelnen dargestellten Schichten, der Konturen der Schichten und der Schichtdicken können für jede einzelne Figur den dargestellten Geometrien entnommen werden, wobei insbesondere Abweichungen von 10 oder 20 % oder sogar bis zu 30% nach oben und unten möglich sind.

### BEZUGSZEICHENLISTE

| | | | |
|---|---|---|---|
| 1 | Griff | 31 | Radius Mantel |
| 2 | Schaft | 32 | Durchmesser Mantel |
| 3 | Längsachse | 33 | Radius Griffkern |
| 4 | Übertragungsquerschnitt Schaft | 34 | Radius Mantel |
| | | 35 | Mantelschicht |
| 6 | Griffkern | 36 | Verlauf |
| | | 37 | Verlauf |
| 8 | Rippen Griffkern | 38 | maximale radiale Erstreckung |
| 9 | Griffkernummantelung | 39 | minimale radiale Erstreckung |
| 10 | weiche Schicht | 40 | radiale Erstreckung |
| 11 | Außenschicht | 41 | radiale Erstreckung |
| | | 42 | Steg, Bund |
| 13 | Rippen | 43 | Endbereich |
| 14 | Mantelfläche | 44 | Nase |
| | | 45 | Nut |
| | | | |
| 17 | Endbereich | | |
| 18 | Endbereich | | |
| | | | |
| 26 | Mittenbereich | | |
| 27 | äußere Schicht | | |
| 28 | innere Schicht | | |
| 29 | Längserstreckung | | |
| 30 | Erstreckung Rippe/rechteckiger Übertragungsquerschnitt | | |

## Patentansprüche

1. Griff (1) für ein ein Torsionsmoment oder eine Druckkraft übertragendes Werkzeug, insbesondere für einen Schraubendreher, mit
a) einer äußeren Schicht (27) aus einem weichen Kunststoff und
b) einer stoffschlüssig mit der äußeren Schicht (27) verbundenen inneren Schicht (28) aus einem Kunststoff, die härter ist als die äußere Schicht (27), wobei
c) in der inneren Schicht (28) unmittelbar oder unter Zwischenschaltung einer weiteren Schicht ein Schaft (2) des Werkzeugs angeordnet ist,
d) die äußere Schicht (27) aus dem weichen Kunststoff und in Umfangsrichtung umlaufend ausgebildet ist, **dadurch gekennzeichnet, dass** die äuβere Schicht (27)
da) in einem Teilumfangsbereich eine maximale radiale Erstreckung (38) besitzt, die zumindest 30 % des Radius des Griffs (1) in diesem Bereich beträgt,
db) in Umfangsrichtung eine veränderliche radiale Erstreckung besitzt und
dc) in einem Teilumfangsbereich eine minimale radiale Erstreckung (39) besitzt, die höchstens 60% der maximalen radialen Erstreckung (38) ist,
e) wobei die äußere Schicht (27) mit einer Mantelschicht (35) aus einem Kunststoff ummantelt ist, der härter ist als der weiche Kunststoff der äußeren Schicht (27) und insbesondere dem Kunststoff der inneren Schicht (9; 28) entspricht, wobei mit der Mantelschicht (35) eine Mantelfläche (14) des Griffs (1) gebildet ist und die radiale Erstreckung der Mantelschicht (35) derart bemessen ist, dass bei von der Hand eines Benutzers des Griffs (1) auf die Mantelfläche (14) ausgeübten Kräften eine elastische Verformung sowohl der Mantelschicht (35) als auch der äußeren Schicht (27) erfolgt.

2. Griff nach Anspruch 1, **dadurch gekennzeichnet, dass** die innere Schicht (28) einen Griffkern (6) bildet und aus einem Hartkunststoff besteht.

3. Griff nach Anspruch 2, **dadurch gekennzeichnet, dass** das Verhältnis der radialen Erstreckung der äußeren Schicht (27) zu der radialen Erstreckung des Griffkerns (6) an der Stelle des größten Durchmessers der äußeren Schicht (27) größer als 1,5, insbesondere größer als 1,8, ist.

4. Griff nach einem der vorhergehenden Ansprüche, **dadurch gekennzeichnet, dass** die äußere Schicht (27) und die innere Schicht (28) als geschlossene Strukturen ausgebildet sind.

5. Griff nach Anspruch 1 oder 4, **dadurch gekennzeichnet, dass** eine Härte der inneren Schicht (28), die insbesondere eine Griffkernummantelung (9) bildet, zwischen 25 und 90, vorzugsweise zwischen 30 und 85 Shore A, insbesondere 30 bis 60 Shore A, beträgt.

6. Griff nach einem der vorhergehenden Ansprüche, **dadurch gekennzeichnet, dass** die äußere Schicht (27) die Mantelfläche (14) des Griffs (1) bildet und eine Härte aufweist zwischen 25 und 75 Shore A, insbesondere 35 bis 55 Shore A.

7. Griff nach einem der vorhergehenden Ansprüche, **dadurch gekennzeichnet, dass** die äußere Schicht (27) eine Härte von 35 bis 70 Shore A, insbesondere 40 bis 60 Shore A, besitzt

8. Griff nach einem der Ansprüche 1 bis 5 und 7, **dadurch gekennzeichnet, dass** eine Härte der äußeren Schicht (27) 10 bis 40 Shore A beträgt, vorzugsweise 15 bis 35 Shore A.

9. Griff nach einem der Ansprüche 1, 7 oder 8, **dadurch gekennzeichnet, dass** die Härte der Mantelschicht (11; 35) 25 bis 90 Shore A beträgt, vorzugsweise 30 bis 85 Shore A, insbesondere 30 bis 60 Shore A.

10. Griff nach einem der vorhergehenden Ansprüche, **dadurch gekennzeichnet, dass** in einem Teilumfangsbereich die innere Schicht (28) Rippen (8, 13) oder Fortsätze aufweist, im Bereich derer die radiale Erstreckung der äußeren Schicht (27) vermindert ist.

11. Griff nach Anspruch 10, **dadurch gekennzeichnet, dass** zwei Teilumfangsbereiche mit verminderter radialer Erstreckung der äußeren Schicht (27) und Rippen (8, 13) oder Fortsätze der inneren Schicht (28) vorgesehen sind.

12. Griff nach einem der vorhergehenden Ansprüche, **dadurch gekennzeichnet, dass** die innere Schicht (28) eine im Wesentlichen rechteckige äußere Querschnittskontur aufweist.

13. Griff nach einem der Ansprüche 1 bis 3 und 5 bis 12, **dadurch gekennzeichnet, dass** die äußere Schicht (27) porös ausgebildet ist und das Raumgewicht der äußeren Schicht (27) zwischen 0,2 und 0,8 g/cm³ beträgt.

14. Griff nach einem der Ansprüche 1 bis 11 und 13, **dadurch gekennzeichnet, dass** die innere Schicht (Griffkern 6; 28) eine runde äußere Grundquerschnittskontur aufweist mit mindestens einer sich radial nach außen erstreckenden Rippe (8, 13).

15. Griff nach einem der Ansprüche 1 bis 11 und 13, **dadurch gekennzeichnet, dass** die innere Schicht (Griffkern 6; 28) eine in erster Näherung sternförmige Außenkontur besitzt.

16. Griff nach einem der vorhergehenden Ansprüche, **dadurch gekennzeichnet, dass** die äußere Schicht (27) oder die Mantelschicht (11, 35) zumindest im Bereich einer axialen Erstreckung (29) eine in Umfangsrichtung und/oder axialer Richtung im Wesentlichen konstante Dicke besitzt.

17. Griff nach einem der vorhergehenden Ansprüche, **dadurch gekennzeichnet, dass** die äußere Schicht (27) mit einem thermoplastischen Elastomer, einem thermoplastischen Polyolefin, Polypropylen, EPDM-Kautschuk, PVC oder Styrol-Block-Copolymer gebildet ist.

18. Griff nach einem der vorhergehenden Ansprüche, **dadurch gekennzeichnet, dass** die maximale radiale Erstreckung (38) der äußeren Schicht (27) größer ist als 4 mm.

19. Griff nach einem der vorhergehenden Ansprüche, **dadurch gekennzeichnet, dass** die eine Mantelfläche (14) des Griffes ausbildende äußere Schicht (27) oder Mantelschicht (35) einen Füllstoff aufweist.

20. Griff nach einem der vorhergehenden Ansprüche, **dadurch gekennzeichnet, dass** eine Mantelfläche (14) des Griffs (1) mit einer Folie gebildet ist, die stoffschlüssig an eine innenliegende Schicht angebunden ist.

21. Griff nach einem der Ansprüche 1 oder 7 bis 20, **dadurch gekennzeichnet, dass** die radiale Erstreckung der Mantelschicht (11, 35) an der Stelle des größten Griffdurchmessers 30 bis 100 % der radialen Erstreckung der äußeren Schicht (27) an dieser Stelle beträgt.

22. Griff nach einem der Ansprüche 1 oder 7 bis 21, **dadurch gekennzeichnet, dass** die radiale Erstreckung der Mantelschicht (11, 35) zwischen 0,5 und 4 mm liegt.

23. Griff nach einem der vorhergehenden Ansprüche, **dadurch gekennzeichnet, dass** die radiale Erstreckung der äußeren Schicht (27) in axialer Richtung veränderlich ist.

## Claims

1. Handle for a tool transferring a torsional moment or a pressing force, in particular for a screw driver, with
a) an outer layer (27) made of a soft plastic material and
b) an inner layer (28) made of a plastic material being harder than the outer layer (27) and being adhesively or materially bond with the outer layer (27), wherein
c) a shaft (2) of the tool is located in the inner layer (28) wherein the shaft (2) is located immediately within the inner layer (28) or located within the inner layer (28) with the interposition of another layer,
d) the outer layer (27) is made of a soft plastic material and extends along the entire circumference,
**characterised by** the outer layer (27)
da) having a maximal radial extension (38) in a partial circumferential region of at least 30 % of the radius of the handle (17) in this region,
db) having a changing radial extension in circumferential direction and
dc) having a minimal radial extension (39) in a partial circumferential region of 60 % or less of the maximal radial extension (38),
e) wherein the outer layer (27) is covered by a cover layer (35) made of a plastic material being harder than the soft plastic material of the outer layer (27), and in particular beeing the plastic material of the inner layer (9; 28), wherein the cover layer (35) builds a cover surface (14) of the handle (1) and wherein the radial extension of the cover layer (35) is chosen such that under the bias of forces applied by the hand of the user of the handle (1) upon the cover surface (14) both the cover layer (35) as well as the outer layer (27) are elastically deformed.

2. Handle according to claim 1, wherein the inner layer (28) builds a core (6) of the handle and the inner layer (28) is made of a hard plastic material.

3. Handle according to claim 2, wherein the ratio of the radial extension of the outer layer (27) and the radial extension of the core (6) of the handle is larger than 1,5, in particular larger than 1,8 at the position of the largest diameter of the outer layer (27).

4. Handle according to one of claims 1 to 3, wherein the outer layer (27) and the inner layer (28) are built as closed or non-porous structures.

5. Handle according to claim 1 or 4, wherein the hardness of the inner layer (28), which in particular builds a cover (9) of the core of the handle, is between 25 and 90 shore A, preferably between 30 and 85 shore A, in particular between 30 and 60 shore A.

6. Handle according to one of claims 1 to 5, wherein the outer layer (27) builds the cover surface (14) of the handle (1) and the outer layer (27) comprises a hardness between 25 and 75 shore A, in particular between 35 and 55 shore A.

7. Handle according to one of claims 1 to 6, wherein the outer layer (27) comprises a hardness of 35 to 70 shore A, in particular 40 to 60 shore A.

8. Handle according to one of claims 1 to 5 or claim 7, wherein a hardness of the outer layer (27) is 10 to 40 shore A, in particular 15 to 35 shore A.

9. Handle according to claims1, 7 or 8, wherein the hardness of the cover layer (11; 35) is 25 to 90 shore A, in particular 30 to 85 shore A, preferably 30 to 60 shore A.

10. Handle according to one of claims 1 to 9, wherein the inner layer (28) comprises ribs (8, 13) or protrusions in a partial circumferential region, wherein in the region of the ribs or protrusions the radial extension of the outer layer (27) is decreased.

11. Handle according to claim 10, wherein two partial circumferential regions are provided having a reduced radial extension of the outer layer (27) and having ribs (8, 13) or protrusions of the inner layer (28).

12. Handle according to one of claims 1 to 11, wherein the inner layer (28) comprises a generally rectangular outer contour in the cross section.

13. Handle according to one of claims 1 to 3 and 5 to 12, wherein the outer layer (27) is porous and the weight per volume of the outer layer (27) is in the range between 0,2 and 0,8 g/cm³.

14. Handle according to one of claims 1 to 11 and 13, wherein the inner layer (handle core 6; 28) comprises a curved or rounded outer base cross sectional contour with at least one rib (8, 13) extending an radial outer direction.

15. Handle according to one of claims 1 to 11 and 13, wherein the inner layer (handle core 6; 28) comprises in a first approximation a star-like outer contour.

16. Handle according to one of claims 1 to 15, wherein the outer layer (27) or the cover layer (11, 35) comprises at least in the region of an axial extension (29) a generally constant thickness in circumferential direction and/or axial direction.

17. Handle according to one of claims 1 to 16, wherein the outer layer (27) is made of a thermoplastic elastomer, a thermoplastic polyolefin, polypropylene, EPDM-rubber, PVC or styrol-block-copolymer.

18. Handle according to one of claims 1 to 17, wherein the maximal radial extension (38) of the outer layer (27) is larger than 4 mm.

19. Handle according to one of claims 1 to 18, wherein the outer layer (27) or cover layer (35) building the cover surface (14) of the handle comprises a filling material.

20. Handle according to one of claims 1 to 19, wherein a cover surface (14) of the handle (1) is built with a foil which is adhesively or materially bond with a layer located therein.

21. Handle according to claim 1 or one of claims 7 to 20, wherein the radial extension of the cover layer (11, 35) at the position of the largest diameter is in the range of 30 % to 100 % of the radial extension of the outer layer (27) at this position.

22. Handle according to claim 1 or one of claims 7 to 21 wherein the radial extension of the cover layer (11, 35) is in the range between 0,5 and 4 mm.

23. Handle according to one of claims 1 to 22, wherein the radial extension of the outer layer (27) changes an axial direction.

## Revendications

1. Poignée (1) pour un outil transmettant un couple de torsion ou une force de pression, plus particulièrement pour un tournevis, avec
a) une couche externe (27) constituée d'une matière plastique souple et
b) une couche interne (28) reliée avec une liaison de matière à la couche externe (27) et constituée d'une matière plastique plus dure que la couche externe (27),
c) une tige (2) de l'outil étant disposée dans la couche interne (28) directement ou en intercalant une couche supplémentaire,
d) la couche externe (27) étant constituée de la matière plastique souple et étant formée de manière circulaire sur la périphérie
**caractérisée en ce que** la couche externe (27)
a) présente, sur une partie de la périphérie, une extension radiale maximale (38) qui représente au moins 30% du rayon de la poignée (1),
b) présente, dans la direction périphérique, une extension radiale variable et
c) présente, sur une partie de la périphérie, une extension radiale minimale (39) qui représente au maximum 60% de l'extension radiale maximale (38),
e) la couche externe (27) étant revêtue d'une couche de revêtement (35) constituée d'une matière plastique plus dure que la matière plastique souple de la couche externe (27) et qui est, plus particulièrement, identique à la matière plastique de la couche interne (9 ; 28), une surface de revêtement (14) de la poignée (1) étant ainsi formée avec la couche de revêtement (35) et l'extension radiale de la couche de revêtement (35) étant dimensionnée de façon à ce que, lors de forces exercées par la main d'un utilisateur de la poignée (1) sur la surface de revêtement (14), une déformation élastique de la couche de revêtement (35) ainsi que de la couche externe (27) ait lieu.

2. Poignée selon la revendication 1, **caractérisée en ce que** la couche interne (28) forme un noyau de poignée (6) et est constituée d'une matière plastique dure.

3. Poignée selon la revendication 2, **caractérisée en ce que** le rapport entre l'extension radiale de la couche externe (27) et l'extension radiale du noyau de poignée (6) à l'endroit du diamètre de la couche externe (27) le plus important est supérieur à 1,5, plus particulièrement supérieur à 1,8.

4. Poignée selon l'une des revendications précédentes, **caractérisée en ce que** la couche externe (27) et la couche interne (28) sont conçues comme des structures fermées.

5. Poignée selon la revendication 1 ou 4, **caractérisée en ce qu'**une dureté de la couche interne (28), qui forme plus particulièrement une gaine de noyau de poignée (9), est entre 25 et 90, de préférence entre 30 et 85 Shore A, plus particulièrement de 30 à 60 Shore A.

6. Poignée selon l'une des revendications précédentes, **caractérisée en ce que** la couche externe (27) forme la surface de revêtement (14) de la poignée (1) et possède une dureté entre 25 et 75 Shore A, plus particulièrement de 35 à 55 Shore A.

7. Poignée selon l'une des revendications précédentes, **caractérisée en ce que** la couche externe (27) possède une dureté de 35 à 70 Shore A, plus particulièrement de 40 à 60 Shore A.

8. Poignée selon l'une des revendications 1 à 5 et 7, **caractérisée en ce qu'**une dureté de la couche externe (27) est de 10 à 40 Shore A, de préférence de 15 à 35 Shore A.

9. Poignée selon l'une des revendications 1, 7 ou 8, **caractérisée en ce que** la dureté de la couche de revêtement (11 ; 35) est de 25 à 90 Shore A, de préférence de 30 à 85 Shore A, plus particulièrement de 30 à 60 Shore A.

10. Poignée selon l'une des revendications précédentes, **caractérisée en ce que**, dans une zone périphérique partielle, la couche interne (28) présente des nervures (8, 13) ou des prolongements au niveau desquels l'extension radiale de la couche externe (27) est réduite.

11. Poignée selon la revendication 10, **caractérisée en ce que** deux zones périphériques partielles avec une extension radiale réduite de la couche externe (27) et des nervures (8, 13) ou des prolongements de la couche interne (28) sont prévues.

12. Poignée selon l'une des revendications précédentes, **caractérisée en ce que** la couche interne (28) présente un contour de section transversale externe globalement rectangulaire.

13. Poignée selon l'une des revendications 1 à 3 et 5 à 12, **caractérisée en ce que** la couche externe (27) est poreuse et le poids volumique de la couche externe (27) est entre 0,2 et 0,8 g/cm³.

14. Poignée selon l'une des revendications 1 à 11 et 13, **caractérisée en ce que** la couche interne (noyau de poignée 6 ; 28) présente un contour de section transversale de base externe ronde avec au moins une nervure (8, 13) s'étendant radialement vers l'extérieur.

15. Poignée selon l'une des revendications 1 à 11 et 13, **caractérisée en ce que** la couche interne (noyau de poignée 6 ; 28) présente un contour externe en forme d'étoile en première approximation.

16. Poignée selon l'une des revendications précédentes, **caractérisée en ce que** la couche externe (27) ou la couche de revêtement (11, 35) présente, au moins au niveau d'une extension axiale (29), une épaisseur globalement constante sur la périphérie et/ou dans la direction axiale.

17. Poignée selon l'une des revendications précédentes, **caractérisée en ce que** la couche externe (27) est constituée d'un élastomère thermoplastique, d'une polyoléfine thermoplastique, de polypropylène, d'un caoutchouc EPDM, de PVC ou d'un copolymère séquencé de styrène.

18. Poignée selon l'une des revendications précédentes, **caractérisée en ce que** l'extension radiale maximale (38) de la couche externe (27) est supérieure à 4 mm.

19. Poignée selon l'une des revendications précédentes, **caractérisée en ce que** la couche externe (27) constituant une surface de revêtement (14) de la poignée ou la couche de revêtement (35) contient une charge.

20. Poignée selon l'une des revendications précédentes, **caractérisée en ce qu'**une surface de revêtement (14) de la poignée (1) est constituée d'un film lié avec une liaison de matière à une couche située à l'intérieur.

21. Poignée selon l'une des revendications 1 ou 7 à 20, **caractérisée en ce que** l'extension radiale de la couche de revêtement (11, 35) représente, à l'endroit où le diamètre est le plus important, 30 à 100% de l'extension radiale de la couche externe (27) à cet endroit.

22. Poignée selon l'une des revendications 1 ou 7 à 21, **caractérisée en ce que** l'extension radiale de la couche de revêtement (11, 35) est entre 0,5 et 4 mm.

23. Poignée selon l'une des revendications précédentes, **caractérisée en ce que** l'extension radiale de la couche externe (27) est variable dans la direction axiale.
